# EUROPEAN PATENT APPLICATION

(11) **EP 4 586 672 A1**
(43) Date of publication of application: **16.07.2025**
(21) Application number: 23870649.3
(22) Date of filing: 22.09.2023
(51) Int. Cl.: H04W 24/08

(54) **CELL SIGNAL QUALITY MEASUREMENT METHOD, AS WELL AS RELATED APPARATUS**

(30) Priority: 29.09.2022 CN 202211224416
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN); ZHENG, Lili, Shenzhen, Guangdong 518129 (CN)
(74) Representative: Gill Jennings & Every LLP
(86) International application number: PCT/CN2023/120846
(87) International publication number: WO 2024/067418

(57) **Abstract**

Embodiments of this application provide a method for measuring signal quality of a cell, and a related apparatus. The method includes: receiving a measurement configuration from a network device, where the measurement configuration includes a trigger beam quantity, and the trigger beam quantity is a beam quantity threshold that triggers generation of a cell measurement result; determining that a quantity of detected beams is greater than or equal to the trigger beam quantity, where the detected beams belong to one or more cells; and obtaining a cell measurement result for the one or more cells based on signal quality of the detected beams. According to embodiments of this application, a frequency of reporting a measurement report can be decreased, reducing communication overheads.

## Description

This application claims priority to Chinese Patent Application No. 202211224416.2, filed with the China National Intellectual Property Administration on September 29, 2022 and entitled "METHOD FOR MEASURING SIGNAL QUALITY OF CELL, AND RELATED APPARATUS", which is incorporated herein by reference in its entirety.

### TECHNICAL FIELD

This application relates to the field of communication technologies, and in particular, to a method for measuring signal quality of a cell, and a related apparatus.

### BACKGROUND

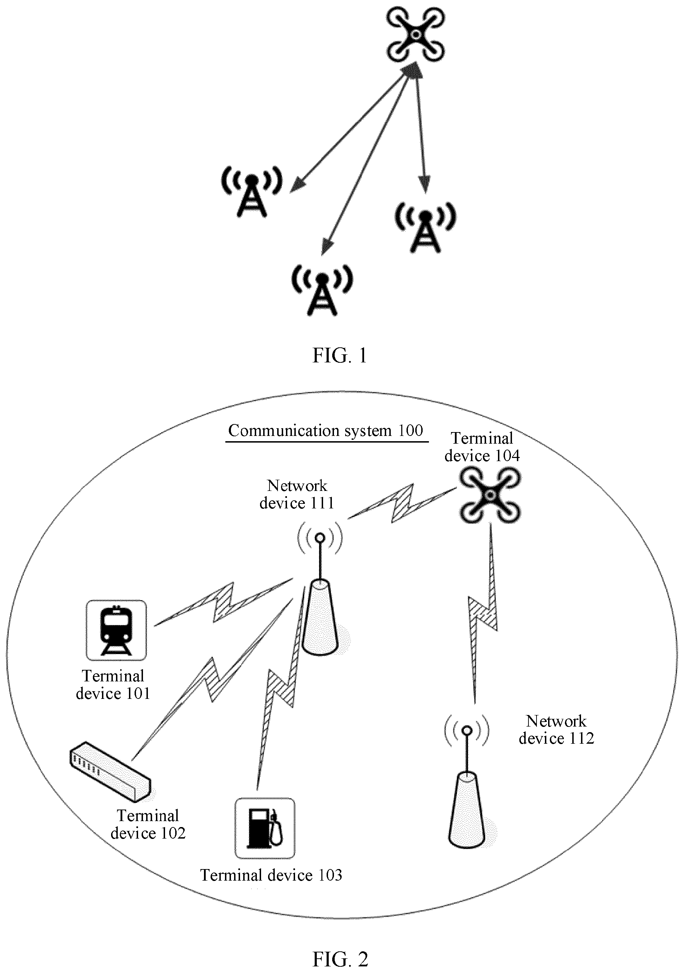

As a novel type of aircraft, uncrewed aerial vehicles (Uncrewed Aerial Vehicles, UAVs) are becoming increasingly common nowadays because they are flexible and convenient. In addition, a cellular network can provide the UAVs with support for important features such as extensive coverage, high reliability, high security, and continuous mobility, and provide a regulator with regulatory capabilities. A communication environment of the UAV is greatly different from that of an ordinary UE. The UAV mainly flies above a base station, is connected to the base station through an air interface (Uu interface), and mainly employs line of sight (line of sight, LOS) communication. Therefore, the UAV can receive more signals from the base station, as shown in FIG. 1.

A mobile communication system is originally designed for terrestrial UEs. An existing trigger mechanism for measurement reporting for the terrestrial UEs is as follows: If a layer 3 filtering result of a cell during a time to trigger (trigger to time, TTT) always meets a corresponding trigger event, a UE adds the cell to a cellsTriggeredList (cellsTriggeredList), and sends a measurement report (Measurement Report) for a cell in the cellsTriggeredList. As the UAVs become common, 3GPP enhances a measurement mechanism for the UAVs in R15. Specifically, the communication environment of the UAV in the air is significantly different from that at the ground. First, because base stations all radiate electromagnetic waves toward the ground, and signals in the air are all basically reflections of terrestrial signals and beam sidelobes of the base stations, signals received by the UAV are weak. In addition, because the UAV mainly employs LOS communication in the air, the UAV can receive more signals from the base stations, triggering more measurement reports more frequently. For the problem facing the UAV, long term evolution (Long Term Evolution, LTE) is enhanced as follows: When there are N cells, and layer 3 filtering results of the N cells during a TTT always meet corresponding trigger events, a UAV sends a measurement report to a base station. To be specific, the UAV sends the measurement report (Measurement Report) to the base station only when obtaining, through measurement, that all the N cells meet a trigger condition. N is delivered by the base station and is in a measurement configuration. The trigger events may be A3, A4, and A5.

However, when the UAV flies in the air, because the communication environment is significantly different from that at the ground, measurement reports are still reported frequently. Therefore, in a scenario in which a base station communicates with a UAV over beams, how to further limit a frequency of reporting a measurement report is a technical problem that is being studied by persons skilled in the art.

### SUMMARY

Embodiments of this application disclose a method for measuring signal quality of a cell, and a related apparatus, to reduce a frequency of reporting a measurement report.

According to a first aspect, an embodiment of this application discloses a method for measuring signal quality of a cell. The method may be applicable to a terminal device or a component (for example, a circuit or a chip) in a terminal device. In some possible implementations, the method includes:
receiving a measurement configuration from a network device, where the measurement configuration includes a trigger beam quantity, and the trigger beam quantity is a beam quantity threshold that triggers generation of a cell measurement result;
determining that a quantity of detected beams is greater than or equal to the trigger beam quantity, where the detected beams belong to one or more cells; and
obtaining a cell measurement result for the one or more cells based on signal quality of the detected beams.

In the foregoing method, the network device adds the trigger beam quantity to the measurement configuration. Correspondingly, when a quantity of detected beams is greater than or equal to the trigger beam quantity, a measurement result is generated for a corresponding cell. In this way, a frequency of reporting a measurement report for a cell can be reduced, saving communication resources.

With reference to the first aspect, in a possible implementation of the first aspect, the measurement configuration further includes a trigger cell quantity, the trigger cell quantity is a cell quantity threshold that triggers reporting of a measurement report, and the method further includes:
determining that a quantity of first cells meeting criteria is greater than or equal to the trigger cell quantity; and
sending a measurement report corresponding to the first cells to the network device.

In this implementation, the measurement configuration further carries the trigger cell quantity. When a quantity of cells meeting the criteria is greater than or equal to the trigger cell quantity, a measurement report is reported. Due to constraints of both the trigger beam quantity and the trigger cell quantity, the frequency of reporting a measurement report for a cell is further reduced, saving communication resources.

With reference to any one of the first aspect or the foregoing possible implementations of the first aspect, in another possible implementation of the first aspect,
the determining that a quantity of detected beams is greater than or equal to the trigger beam quantity includes:
determining that a quantity of detected second cells is greater than or equal to the trigger beam quantity; and
the obtaining a cell measurement result for the one or more cells based on signal quality of the detected beams includes:
   obtaining a cell measurement result for the second cell based on signal quality of the beams of the second cell.

In this implementation, a quantity of detected beams of each cell is compared with the trigger beam quantity at a per-cell granularity. Therefore, a signal status of a cell can be assessed from a perspective of a cell, providing a basis for determining whether subsequent obtaining of a cell measurement result is performed.

With reference to any one of the first aspect or the foregoing possible implementations of the first aspect, in another possible implementation of the first aspect,
the determining that a quantity of detected beams is greater than or equal to the trigger beam quantity includes:
determining that a sum of quantities of detected beams of cells is greater than or equal to the trigger beam quantity; and
the obtaining a cell measurement result for the one or more cells based on signal quality of the detected beams includes:
   obtaining a cell measurement result for each cell based on signal quality of the detected beams of the cell.

In this implementation, a total quantity of detected beams of one or more cells that correspond to a terminal device is compared with the trigger beam quantity at a per-terminal device granularity. Therefore, a signal status of a cell can be assessed from a perspective of a terminal device, providing a basis for determining whether subsequent obtaining of a cell measurement result is performed.

With reference to any one of the first aspect or the foregoing possible implementations of the first aspect, in another possible implementation of the first aspect, the determining that a quantity of detected beams is greater than or equal to the trigger beam quantity includes:
determining that a quantity of beams detected before layer 1 filtering is greater than or equal to the trigger beam quantity; or
determining that a quantity of beams detected after layer 1 filtering is greater than or equal to the trigger beam quantity; or
determining that a quantity of beams detected after layer 3 beam filtering is greater than or equal to the trigger beam quantity; or
determining that a quantity of beams detected during beam selection/consolidation is greater than or equal to the trigger beam quantity.

In this implementation, the detected beams may be detected before layer 1 filtering, after layer 1 filtering, after layer 3 beam filtering, or during beam selection/consolidation. When it is determined whether the quantity of the detected beams is greater than or equal to the trigger beam quantity, any one or more of the quantities of the beams detected in the several phases may be compared with the trigger beam quantity. Comparison results can all reflect a signal status of a cell to some extent. It can be understood that trigger beam quantities configured or preset for different phases may be different.

With reference to any one of the first aspect or the foregoing possible implementations of the first aspect, in another possible implementation of the first aspect, before the receiving a measurement configuration from a network device, the method further includes:
sending flight status information to the network device, where a flight status includes one or more of a flight altitude, a flight speed, a flight location, or a flight path.

In this implementation, when the flight status information is sent to the network device, the network device can configure the trigger beam quantity based on the flight status information. According to this implementation, a cellular network can meet requirements of more scenarios, improving flexibility of communication.

With reference to any one of the first aspect or the foregoing possible implementations of the first aspect, in another possible implementation of the first aspect, before the determining that a quantity of detected beams is greater than or equal to the trigger beam quantity, the method further includes:
receiving indication information and flight reference information from the network device, where the indication information is used to indicate to use the trigger beam quantity when a flight status exceeds a range specified in the flight reference information, and the flight status includes one or more of a flight altitude, a flight speed, a flight location, or a flight path; and
determining that the flight status is within the range specified in the flight reference information.

In this implementation, after the indication information and the flight reference information are obtained from the network device, a corresponding trigger beam quantity can be selected for use based on the indication information and the flight reference information. According to this implementation, a cellular network can meet requirements of more scenarios, improving flexibility of communication.

With reference to any one of the first aspect or the foregoing possible implementations of the first aspect, in another possible implementation of the first aspect, the determining that a quantity of detected beams is greater than or equal to the trigger beam quantity includes:
determining that a quantity of beams measured by a first type of antenna and/or a quantity of beams measured by a second type of antenna are/is greater than or equal to the trigger beam quantity.

For example, a type of antenna is selected from the first type of antenna and the second type of antenna, and then it is determined whether the quantity of the beams measured by the selected type of antenna is greater than or equal to the cumulative signal quality sum threshold. For another example, the quantity of the beams measured by the first type of antenna and the quantity of the beams measured by the second type of antenna are added up, and then it is determined whether a result of the addition is greater than or equal to the cumulative signal quality sum threshold. For another example, each of the quantity of the beams measured by the first type of antenna and the quantity of the beams measured by the second type of antenna is compared with the cumulative signal quality sum threshold. When any one of comparison results is greater than or equal to the cumulative signal quality sum threshold, it can be determined that the quantity of the beams measured is greater than or equal to the cumulative signal quality sum threshold. With reference to any one of the first aspect or the foregoing possible implementations of the first aspect, in another possible implementation of the first aspect, the first type of antenna includes a directional antenna, and the second type of antenna includes an omnidirectional antenna.

With reference to any one of the first aspect or the foregoing possible implementations of the first aspect, in another possible implementation of the first aspect, the measurement configuration further includes a cumulative signal quality sum threshold, and the cumulative signal quality sum threshold is a cumulative signal quality sum threshold for beams that triggers generation of a cell measurement result; and
before the obtaining a cell measurement result for the one or more cells based on signal quality of the detected beams, the method further includes:
determining that a cumulative signal quality sum of the detected beams is greater than or equal to the cumulative signal quality sum threshold.

In this implementation, when it is determined that the quantity of the detected beams is greater than or equal to the trigger beam quantity and that the cumulative signal quality sum of the detected beams is greater than or equal to the cumulative signal quality sum threshold, the operation of obtaining a cell measurement result for the one or more cells based on signal quality of the detected beams is performed. According to this implementation, overheads that a terminal device uses for measurement can be further reduced, and the frequency of reporting a measurement report can be decreased, further saving communication resources.

According to a second aspect, an embodiment of this application provides a method for measuring signal quality of a cell. The method may be applicable to a network device or a component (for example, a circuit or a chip) in a network device. In some possible implementations, the method includes:
generating a measurement configuration, where the measurement configuration includes a trigger beam quantity, and the trigger beam quantity is a beam quantity threshold that triggers generation of a cell measurement result; and
sending the measurement configuration to a terminal device.

In the foregoing method, the trigger beam quantity is added to the measurement configuration. Correspondingly, when a quantity of detected beams is greater than or equal to the trigger beam quantity, the terminal device generates a measurement result for a corresponding cell. In this way, a frequency of reporting a measurement report for a cell can be reduced, saving communication resources.

With reference to the second aspect, in a possible implementation of the second aspect, the measurement configuration further includes a trigger cell quantity, the trigger cell quantity is a cell quantity threshold that triggers reporting of a measurement report, and the method further includes:
receiving a measurement report from the terminal device.

In this implementation, the measurement configuration further carries the trigger cell quantity. When a quantity of cells meeting reporting criteria is greater than or equal to the trigger cell quantity, a measurement report is reported. Due to constraints of both the trigger beam quantity and the trigger cell quantity, the frequency of reporting a measurement report for a cell is further reduced, saving communication resources.

With reference to any one of the second aspect or the foregoing possible implementations of the second aspect, in another possible implementation of the second aspect, before the generating a measurement configuration, the method further includes:
obtaining flight status information of the terminal device;
determining, based on the flight status information, that a flight status of the terminal device exceeds a range specified in flight reference information, where the flight status includes one or more of a flight altitude, a flight speed, a flight location, or a flight path; and
configuring the trigger beam quantity.

In this implementation, after the flight status information is received from the terminal device, the trigger beam quantity can be configured based on the flight status information. According to this implementation, a cellular network can meet requirements of more scenarios, improving flexibility of communication.

With reference to any one of the second aspect or the foregoing possible implementations of the second aspect, in another possible implementation of the second aspect, the obtaining a flight status of the terminal device includes:
receiving the flight status information from the terminal device.

With reference to any one of the second aspect or the foregoing possible implementations of the second aspect, in another possible implementation of the second aspect, the method further includes:
sending indication information and flight reference information to the terminal device, where the indication information is used to indicate to use the trigger beam quantity when a flight status exceeds a range specified in the flight reference information, and the flight status includes one or more of a flight altitude, a flight speed, a flight location, or a flight path.

In this implementation, after the indication information and the flight reference information are sent to the terminal device, the terminal device can select a corresponding trigger beam quantity for use based on the indication information and the flight reference information. According to this implementation, a cellular network can meet requirements of more scenarios, improving flexibility of communication.

With reference to any one of the second aspect or the foregoing possible implementations of the second aspect, in another possible implementation of the second aspect, the measurement configuration further includes a cumulative signal quality sum threshold, and the cumulative signal quality sum threshold is a cumulative signal quality sum threshold for beams that triggers generation of a cell measurement result.

In this implementation, the measurement configuration includes the trigger beam quantity and the cumulative signal quality sum threshold. In this way, when determining that a quantity of detected beams is greater than or equal to the trigger beam quantity and that a cumulative signal quality sum of the detected beams is greater than or equal to the cumulative signal quality sum threshold, the terminal device performs the following operation: obtaining a cell measurement result for one or more cells based on signal quality of the detected beams. According to this implementation, overheads that a terminal device uses for measurement can be further reduced, and the frequency of reporting a measurement report can be decreased, further saving communication resources.

According to a third aspect, an embodiment of this application provides a communication apparatus. The communication apparatus has functions of implementing acts or steps in the method according to any one of the first aspect or the implementations of the first aspect. The communication apparatus may be a terminal device, or a component (for example, a chip or a circuit) that can be used in a terminal device. The functions may be implemented by hardware, or may be implemented by executing corresponding software by hardware. The hardware or software includes one or more modules corresponding to the foregoing functions.

According to a fourth aspect, an embodiment of this application provides a communication apparatus. The communication apparatus has functions of implementing acts or steps in the method according to any one of the second aspect or the implementations of the second aspect. The communication apparatus may be a network device, or a component (for example, a chip or a circuit) that can be used in a network device. The functions may be implemented by hardware, or may be implemented by executing corresponding software by hardware. The hardware or software includes one or more modules corresponding to the foregoing functions.

According to a fifth aspect, an embodiment of this application provides a method for reporting a measurement report. The method may be applicable to a terminal device or a component (for example, a circuit or a chip) in a terminal device. In some possible implementations, the method includes:
receiving a measurement configuration from a network device, where the measurement configuration includes a cumulative signal quality sum threshold and a trigger cell quantity, the cumulative signal quality sum threshold is a cumulative signal quality sum threshold for beams that triggers generation of a cell measurement result, and the trigger cell quantity is a cell quantity threshold that triggers reporting of a measurement report;
determining that a cumulative signal quality sum of detected beams is greater than or equal to the cumulative signal quality sum threshold, where the detected beams belong to one or more cells;
obtaining a cell measurement result for the one or more cells based on signal quality of the detected beams;
determining that a quantity of first cells meeting criteria is greater than or equal to the trigger cell quantity; and
sending a measurement report corresponding to the first cells to the network device.

According to the foregoing method, the network device adds the cumulative signal quality sum threshold and the trigger cell quantity to the measurement configuration. Correspondingly, when a cumulative signal quality sum of detected beams is greater than or equal to the cumulative signal quality sum threshold, a terminal device generates a measurement result for a corresponding cell. In this way, a frequency of reporting a measurement report for a cell can be reduced, saving communication resources. In addition, when a quantity of cells meeting the reporting criteria is greater than or equal to the trigger cell quantity, a measurement report is reported. Due to constraints of both the cumulative cell signal quality and the trigger cell quantity, the frequency of reporting a measurement report for a cell is reduced, saving communication resources.

With reference to the fifth aspect, in a possible implementation of the fifth aspect,
the determining that a cumulative signal quality sum of detected beams is greater than or equal to the cumulative signal quality sum threshold includes:
determining that a cumulative signal quality sum of detected beams of a second cell is greater than or equal to the cumulative signal quality sum threshold; and
the obtaining a cell measurement result for the one or more cells based on signal quality of the detected beams includes:
   obtaining a cell measurement result for the second cell based on signal quality of the beams of the second cell.

In this implementation, a cumulative signal quality sum of detected beams of each cell is compared with the cumulative signal quality sum threshold at a per-cell granularity. Therefore, a signal status of a cell can be assessed from a perspective of a cell, providing a basis for determining whether subsequent obtaining of a cell measurement result is performed.

With reference to any one of the fifth aspect or the foregoing possible implementations of the fifth aspect, in another possible implementation of the fifth aspect,
the determining that a cumulative signal quality sum of detected beams is greater than or equal to the cumulative signal quality sum threshold includes:
determining that a cumulative signal quality sum of detected beams of cells is greater than or equal to the cumulative signal quality sum threshold; and
the obtaining a cell measurement result for the one or more cells based on signal quality of the detected beams includes:
   obtaining a cell measurement result for each cell based on signal quality of the detected beams of the cell.

In this implementation, a cumulative signal quality sum of detected beams of one or more cells that correspond to a terminal device is compared with the cumulative signal quality sum threshold at a per-terminal device granularity. Therefore, a signal status of a cell can be assessed from a perspective of a terminal device, providing a basis for determining whether subsequent obtaining of a cell measurement result is performed.

With reference to any one of the fifth aspect or the foregoing possible implementations of the fifth aspect, in another possible implementation of the fifth aspect,
the determining that a cumulative signal quality sum of detected beams is greater than or equal to the cumulative signal quality sum threshold includes:
determining that a cumulative signal quality sum of beams detected before layer 1 filtering is greater than or equal to the cumulative signal quality sum threshold; or
determining that a cumulative signal quality sum of beams detected after layer 1 filtering is greater than or equal to the cumulative signal quality sum threshold; or
determining that a cumulative signal quality sum of beams detected after layer 3 beam filtering is greater than or equal to the cumulative signal quality sum threshold; or
determining that a cumulative signal quality sum of beams detected during beam selection/consolidation is greater than or equal to the cumulative signal quality sum threshold.

In this implementation, the detected beams may be detected before layer 1 filtering, after layer 1 filtering, after layer 3 beam filtering, or during beam selection/consolidation. When it is determined whether the cumulative signal quality sum of the detected beams is greater than or equal to the cumulative signal quality sum threshold, any one or more of the cumulative signal quality sums of the beams detected in the several phases may be compared with the cumulative signal quality sum threshold. Comparison results can all reflect a signal status of a cell to some extent. It can be understood that cumulative signal quality sum thresholds configured or preset for different phases may be different.

With reference to any one of the fifth aspect or the foregoing possible implementations of the fifth aspect, in another possible implementation of the fifth aspect, the obtaining a cell measurement result for the one or more cells based on signal quality of the detected beams includes:
obtaining a first cumulative signal quality sum of beams detected over a first time period;
obtaining M second cumulative signal quality sums that correspond to beams detected over M time periods preceding the first time period, where M≥1; and
obtaining a cell or beam measurement result for the one or more cells based on statuses of the first cumulative signal quality sum and the M second cumulative signal quality sums.

In this implementation, a layer 3 filtering process is constrained based on obtained cumulative signal quality sums corresponding to different time periods, optimizing a layer 3 filtering result, and avoiding a filtering result being significantly affected by some extreme cases.

With reference to any one of the fifth aspect or the foregoing possible implementations of the fifth aspect, in another possible implementation of the fifth aspect, the obtaining a cell or beam measurement result for the one or more cells based on statuses of the first cumulative signal quality sum and the M second cumulative signal quality sums includes:
if the first cumulative signal quality sum is greater than the cumulative signal quality sum threshold, and the M second cumulative signal quality sums include a second cumulative signal quality sum that is greater than the cumulative signal quality sum threshold, generating a cell or beam measurement result for the one or more cells based on signal quality of the beams detected over the first time period, and based on signal quality of beams detected over a time period that corresponds to the second cumulative signal quality sum greater than the cumulative signal quality sum threshold.

In this implementation, signal quality corresponding to a time period that corresponds to a cumulative signal quality sum less than the cumulative signal quality sum threshold is ignored in the layer 3 filtering process.

With reference to any one of the fifth aspect or the foregoing possible implementations of the fifth aspect, in another possible implementation of the fifth aspect, the obtaining a cell or beam measurement result for the one or more cells based on statuses of the first cumulative signal quality sum and the M second cumulative signal quality sums includes:
if the first cumulative signal quality sum is greater than the cumulative signal quality sum threshold, and a second cumulative signal quality sum corresponding to a previous time period of the first time period is less than the cumulative signal quality sum threshold, generating a cell or beam measurement result for the one or more cells based on signal quality of the beams detected over the first time period.

In this implementation, the following is ignored in the layer 3 filtering process: signal quality corresponding to the time period that corresponds to the cumulative signal quality sum less than the cumulative signal quality sum threshold, and signal quality corresponding to a time period that precedes the time period.

With reference to any one of the fifth aspect or the foregoing possible implementations of the fifth aspect, in another possible implementation of the fifth aspect, the obtaining a cell measurement result for the one or more cells based on signal quality of the detected beams includes:
obtaining a first cumulative signal quality sum of beams detected over a first time period; and
if the first cumulative signal quality sum is greater than the cumulative signal quality sum threshold, generating a cell or beam measurement result for the one or more cells based on signal quality of the beams detected over the first time period, and based on signal quality of beams detected within a preset time range that precedes the first time period.

With reference to any one of the fifth aspect or the foregoing possible implementations of the fifth aspect, in another possible implementation of the fifth aspect, before the receiving a measurement configuration from a network device, the method further includes:
sending flight status information to the network device, where a flight status includes one or more of a flight altitude, a flight speed, a flight location, or a flight path.

In this implementation, when the flight status information is sent to the network device, the network device can configure the cumulative signal quality sum threshold based on the flight status information. According to this implementation, a cellular network can meet requirements of more scenarios, improving flexibility of communication.

With reference to any one of the fifth aspect or the foregoing possible implementations of the fifth aspect, in another possible implementation of the fifth aspect, before the determining that a cumulative signal quality sum of detected beams is greater than or equal to the cumulative signal quality sum threshold, the method further includes:
receiving indication information and flight reference information from the network device, where the indication information is used to indicate to use the cumulative signal quality sum threshold when a flight status exceeds a range specified in the flight reference information, and the flight status includes one or more of a flight altitude, a flight speed, a flight location, or a flight path; and
determining that the flight status falls within the range specified in the flight reference information.

In this implementation, after the indication information and the flight reference information are obtained from the network device, a corresponding cumulative signal quality sum threshold can be selected for use based on the indication information and the flight reference information. According to this implementation, a cellular network can meet requirements of more scenarios, improving flexibility of communication.

With reference to any one of the fifth aspect or the foregoing possible implementations of the fifth aspect, in another possible implementation of the fifth aspect, the determining that a cumulative signal quality sum of detected beams is greater than or equal to the cumulative signal quality sum threshold includes:
determining that a cumulative signal quality sum of beams measured by a first type of antenna and/or a cumulative signal quality sum of beams measured by a second type of antenna are/is greater than or equal to the cumulative signal quality sum threshold. For example, a type of antenna is selected from the first type of antenna and the second type of antenna, and then it is determined whether the cumulative signal quality sum of the beams measured by the selected type of antenna is greater than or equal to the cumulative signal quality sum threshold. For another example, the cumulative signal quality sum of the beams measured by the first type of antenna and the cumulative signal quality sum of the beams measured by the second type of antenna are added up, and then it is determined whether a result of the addition is greater than or equal to the cumulative signal quality sum threshold. For another example, each of the cumulative signal quality sum of the beams measured by the first type of antenna and the cumulative signal quality sum of the beams measured by the second type of antenna is compared with the cumulative signal quality sum threshold. When any one of comparison results is greater than or equal to the cumulative signal quality sum threshold, it can be determined that the cumulative signal quality sum of the beams measured is greater than or equal to the cumulative signal quality sum threshold.

With reference to any one of the fifth aspect or the foregoing possible implementations of the fifth aspect, in another possible implementation of the fifth aspect, the first type of antenna includes a directional antenna, and the second type of antenna includes an omnidirectional antenna.

According to a sixth aspect, an embodiment of this application provides a method for measuring signal quality of a cell. The method may be applicable to a network device or a component (for example, a circuit or a chip) in a network device. In some possible implementations, the method includes:
generating a measurement configuration, where the measurement configuration includes a cumulative signal quality sum threshold and a trigger cell quantity, the cumulative signal quality sum threshold is a cumulative signal quality sum threshold for beams that triggers generation of a cell measurement result, and the trigger cell quantity is a cell quantity threshold that triggers reporting of a measurement report;
sending the measurement configuration to a terminal device; and
receiving a measurement report from the terminal device.

According to the foregoing method, the network device adds the cumulative signal quality sum threshold and the trigger cell quantity to the measurement configuration. Correspondingly, when a cumulative signal quality sum of detected beams is greater than or equal to the cumulative signal quality sum threshold, the terminal device generates a measurement result for a corresponding cell. In this way, a frequency of reporting a measurement report for a cell can be reduced, saving communication resources. In addition, when a quantity of cells meeting reporting criteria is greater than or equal to the trigger cell quantity, a measurement report is reported. Due to constraints of both the cumulative cell signal quality and the trigger cell quantity, the frequency of reporting a measurement report for a cell is reduced, saving communication resources.

With reference to the sixth aspect, in a possible implementation of the sixth aspect, before the generating a measurement configuration, the method further includes:
obtaining flight status information of the terminal device;
determining, based on the flight status information, that a flight status of the terminal device exceeds a range specified in flight reference information, where the flight status includes one or more of a flight altitude, a flight speed, a flight location, or a flight path; and
configuring the cumulative signal quality sum threshold.

In this implementation, after the flight status information is received from the network device, the cumulative signal quality sum threshold is configured based on the flight status information. According to this implementation, a cellular network can meet requirements of more scenarios, improving flexibility of communication.

With reference to any one of the sixth aspect or the foregoing possible implementations of the sixth aspect, in another possible implementation of the sixth aspect, the obtaining flight status information of the terminal device includes:
receiving the flight status information from the terminal device.

With reference to any one of the sixth aspect or the foregoing possible implementations of the sixth aspect, in another possible implementation of the sixth aspect, the method further includes:
sending indication information and flight reference information to the terminal device, where the indication information is used to indicate to use the cumulative signal quality sum threshold when a flight status exceeds a range specified in the flight range information, and the flight status includes one or more of a flight altitude, a flight speed, a flight location, or a flight path.

In this implementation, after the indication information and the flight reference information are sent to the terminal device, the terminal device can select a corresponding cumulative signal quality sum threshold for use based on the indication information and the flight reference information. According to this implementation, a cellular network can meet requirements of more scenarios, improving flexibility of communication.

According to a seventh aspect, an embodiment of this application provides a communication apparatus. The communication apparatus has functions of implementing acts or steps in the method according to any one of the fifth aspect or the implementations of the fifth aspect. The communication apparatus may be a terminal device, or a component (for example, a chip or a circuit) that can be used in a terminal device. The functions may be implemented by hardware, or may be implemented by executing corresponding software by hardware. The hardware or software includes one or more modules corresponding to the foregoing functions.

According to an eighth aspect, an embodiment of this application provides a network device communication apparatus. The communication apparatus has functions of implementing acts or steps in the method according to any one of the sixth aspect or the implementations of the sixth aspect. The communication apparatus may be a network device, or a component (for example, a chip or a circuit) that can be used in a network device. The functions may be implemented by hardware, or may be implemented by executing corresponding software by hardware. The hardware or software includes one or more modules corresponding to the foregoing functions.

According to a ninth aspect, an embodiment of this application provides a method for measuring signal quality of a cell. The method may be applicable to a terminal device or a component (for example, a circuit or a chip) in a terminal device. In some possible implementations, the method includes:
receiving a measurement configuration from a network device, where the measurement configuration includes a maximum to-be-measured beam quantity, and the maximum to-be-measured beam quantity is an upper quantity limit of beams that need to be measured for triggering generation of a cell measurement result;
selecting N beams from detected beams based on the maximum to-be-measured beam quantity, where N is less than the maximum to-be-measured beam quantity, and the detected beams belong to one or more cells; and
obtaining a cell measurement result for the one or more cells based on signal quality of the N beams.

According to the foregoing method, the network device adds the maximum to-be-measured beam quantity to the measurement configuration. Correspondingly, when obtaining a cell measurement result for a cell, a terminal device performs measurement only based on beams a quantity of which is less than or equal to the maximum to-be-measured beam quantity. In this way, measurement performed by the terminal device on beams is limited, reducing measurement overheads.

With reference to the ninth aspect, in a possible implementation of the ninth aspect, the measurement configuration further includes a trigger cell quantity, the trigger cell quantity is a cell quantity threshold that triggers reporting of a measurement report, and the method further includes:
determining that a quantity of first cells meeting criteria is greater than or equal to the trigger cell quantity; and
sending a measurement report corresponding to the first cells to the network device.

In this implementation, the measurement configuration further carries the trigger cell quantity. When a quantity of cells meeting the reporting criteria is greater than or equal to the trigger cell quantity, a measurement report is reported. Due to constraints of both the trigger beam quantity and the trigger cell quantity, a frequency of reporting a measurement report for a cell is further reduced, saving communication resources.

With reference to any one of the ninth aspect or the foregoing possible implementations of the ninth aspect, in another possible implementation of the ninth aspect, the selecting N beams from detected beams based on the maximum to-be-measured beam quantity includes:
selecting, based on the maximum to-be-measured beam quantity, N beams from beams that are obtained before layer 1 filtering; or
selecting, based on the maximum to-be-measured beam quantity, N beams from beams that are obtained after layer 1 filtering; or
selecting, based on the maximum to-be-measured beam quantity, N beams from beams that are obtained after layer 3 filtering; or
selecting, based on the maximum to-be-measured beam quantity, N beams from beams that are obtained during beam selection/consolidation.

In this implementation, the detected beams may be detected before layer 1 filtering, after layer 1 filtering, after layer 3 beam filtering, or during beam selection/consolidation. In a process of determining to select N beams, the N beams may be selected from any one or more of the beams obtained in the several phases. Maximum to-be-measured beam quantities designed for different phases may be different.

With reference to any one of the ninth aspect or the foregoing possible implementations of the ninth aspect, in another possible implementation of the ninth aspect, before the receiving a measurement configuration from a network device, the method further includes:
sending flight status information to the network device, where a flight status includes one or more of a flight altitude, a flight speed, a flight location, or a flight path.

In this implementation, when the flight status information is sent to the network device, the network device can configure the maximum to-be-measured beam quantity based on the flight status information. According to this implementation, a cellular network can meet requirements of more scenarios, improving flexibility of communication.

With reference to any one of the ninth aspect or the foregoing possible implementations of the ninth aspect, in another possible implementation of the ninth aspect, before the selecting N beams from detected beams based on the maximum to-be-measured beam quantity, the method further includes:
receiving indication information and flight reference information from the network device, where the indication information is used to indicate to use the maximum to-be-measured beam quantity when a flight status exceeds a range specified in the flight reference information, and the flight status includes one or more of a flight altitude, a flight speed, a flight location, or a flight path; and
determining that the flight status falls within the range specified in the flight reference information.

In this implementation, after the indication information and the flight reference information are obtained from the network device, a corresponding maximum to-be-measured beam quantity can be selected for use based on the indication information and the flight reference information. According to this implementation, a cellular network can meet requirements of more scenarios, improving flexibility of communication.

With reference to any one of the ninth aspect or the foregoing possible implementations of the ninth aspect, in another possible implementation of the ninth aspect, the selecting N beams from detected beams based on the maximum to-be-measured beam quantity includes:
selecting, based on the maximum to-be-measured beam quantity, N beams from beams that are obtained by a first type of antenna and/or a second type of antenna.

For example, a type of antenna is selected from the first type of antenna and the second type of antenna, and then N beams are selected from the beams that are measured by the selected type of antenna. For another example, the beams measured by the first type of antenna and the beams measured by the second type of antenna are all used as objects to be selected, and then N beams are selected from the objects to be selected.

With reference to any one of the ninth aspect or the foregoing possible implementations of the ninth aspect, in another possible implementation of the ninth aspect, the first type of antenna includes a directional antenna, and the second type of antenna includes an omnidirectional antenna.

According to a tenth aspect, an embodiment of this application provides a method for measuring signal quality of a cell. The method may be applicable to a network device or a component (for example, a circuit or a chip) in a network device. In some possible implementations, the method includes:
generating a measurement configuration, where the measurement configuration includes a maximum to-be-measured beam quantity, and the maximum to-be-measured beam quantity is an upper quantity limit of beams that need to be measured for triggering generation of a cell measurement result; and
sending the measurement configuration to a terminal device.

According to the foregoing method, a network device adds the maximum to-be-measured beam quantity to the measurement configuration. Correspondingly, when obtaining a cell measurement result for a cell, the terminal device performs measurement only based on beams a quantity of which is less than or equal to the maximum to-be-measured beam quantity. In this way, measurement performed by the terminal device on beams is limited, reducing measurement overheads.

With reference to the tenth aspect, in a possible implementation of the tenth aspect, the measurement configuration further includes a trigger cell quantity, the trigger cell quantity is a cell quantity threshold that triggers reporting of a measurement report, and the method further includes:
receiving a measurement report from the terminal device.

In this implementation, the measurement configuration further carries the trigger cell quantity. When a quantity of cells meeting reporting criteria is greater than or equal to the trigger cell quantity, a measurement report is reported. Due to constraints of both the trigger beam quantity and the trigger cell quantity, a frequency of reporting a measurement report for a cell is further reduced, saving communication resources.

With reference to any one of the tenth aspect or the foregoing possible implementations of the tenth aspect, in another possible implementation of the tenth aspect, before the generating a measurement configuration, the method further includes:
obtaining flight status information of the terminal device;
determining, based on the flight status information, that a flight status of the terminal device exceeds a range specified in flight reference information, where the flight status includes one or more of a flight altitude, a flight speed, a flight location, or a flight path; and
configuring the maximum to-be-measured beam quantity.

In this implementation, after the flight status information is received from the terminal device, the maximum to-be-measured beam quantity can be configured based on the flight status information. According to this implementation, a cellular network can meet requirements of more scenarios, improving flexibility of communication.

With reference to any one of the tenth aspect or the foregoing possible implementations of the tenth aspect, in another possible implementation of the tenth aspect, the obtaining a flight status of the terminal device includes:
receiving the flight status information from the terminal device.

With reference to any one of the tenth aspect or the foregoing possible implementations of the tenth aspect, in another possible implementation of the tenth aspect, the method further includes:
sending indication information and flight reference information to the terminal device, where the indication information is used to indicate to use the maximum to-be-measured beam quantity when a flight status exceeds a range specified in the flight reference information, and the flight status includes one or more of a flight altitude, a flight speed, a flight location, or a flight path.

In this implementation, after the indication information and the flight reference information are sent to the terminal device, the terminal device can select a corresponding maximum to-be-measured beam quantity for use based on the indication information and the flight reference information. According to this implementation, a cellular network can meet requirements of more scenarios, improving flexibility of communication.

According to an eleventh aspect, an embodiment of this application provides a communication apparatus. The communication apparatus has functions of implementing acts or steps in the method according to any one of the ninth aspect or the implementations of the ninth aspect. The communication apparatus may be a terminal device, or a component (for example, a chip or a circuit) that can be used in a terminal device. The functions may be implemented by hardware, or may be implemented by executing corresponding software by hardware. The hardware or software includes one or more modules corresponding to the foregoing functions.

According to a twelfth aspect, an embodiment of this application provides a network device communication apparatus. The communication apparatus has functions of implementing acts or steps in the method according to any one of the tenth aspect or the implementations of the tenth aspect. The communication apparatus may be a network device, or a component (for example, a chip or a circuit) that can be used in a network device. The functions may be implemented by hardware, or may be implemented by executing corresponding software by hardware. The hardware or software includes one or more modules corresponding to the foregoing functions.

According to a thirteenth aspect, an embodiment of this application provides a computer-readable storage medium. The computer-readable storage medium stores a computer program. When being run on a processor, the computer program implements the method procedures described in any one of the first aspect, the second aspect, the fifth aspect, the sixth aspect, the ninth aspect, the tenth aspect, or the implementations of any one of the aspects.

According to a fourteenth aspect, an embodiment of this application provides a communication system. The communication system includes a terminal device and a network device, where
the terminal device is the terminal device described in any one of the third aspect or the possible implementations of the third aspect, and the network device is the network device described in any one of the fourth aspect or the possible implementations of the fourth aspect; or
the terminal device is the terminal device described in any one of the seventh aspect or the possible implementations of the seventh aspect, and the network device is the network device described in any one of the eighth aspect or the possible implementations of the eighth aspect; or
the terminal device is the terminal device described in any one of the eleventh aspect or the possible implementations of the eleventh aspect, and the network device is the network device described in any one of the twelfth aspect or the possible implementations of the twelfth aspect.

For beneficial effects of the thirteenth aspect and the fourteenth aspect, refer to the beneficial effects of the other aspects referenced by the thirteenth aspect and the fourteenth aspect.

### BRIEF DESCRIPTION OF DRAWINGS

The following describes accompanying drawings used in embodiments of this application.
FIG. 1 is a diagram of a scenario of an uncrewed aerial vehicle receiving signals according to an embodiment of this application;
FIG. 2 is a diagram of an architecture of a communication system according to an embodiment of this application;
FIG. 3 is a diagram of a beamforming scenario according to an embodiment of this application;
FIG. 4 is a schematic flowchart of measuring signal quality of a cell according to an embodiment of this application;
FIG. 5 is a schematic flowchart of measuring signal quality of a cell according to an embodiment of this application;
FIG. 6 is a schematic flowchart of measuring signal quality of a cell according to an embodiment of this application;
FIG. 7 is a schematic flowchart of measuring signal quality of a cell according to an embodiment of this application;
FIG. 8 is a diagram of a structure of an apparatus for measuring signal quality of a cell according to an embodiment of this application;
FIG. 9 is a diagram of a structure of an apparatus for measuring signal quality of a cell according to an embodiment of this application;
FIG. 10 is a diagram of a structure of an apparatus for measuring signal quality of a cell according to an embodiment of this application;
FIG. 11 is a diagram of a structure of an apparatus for measuring signal quality of a cell according to an embodiment of this application;
FIG. 12 is a diagram of a structure of an apparatus for measuring signal quality of a cell according to an embodiment of this application;
FIG. 13 is a diagram of a structure of a terminal device according to an embodiment of this application; and
FIG. 14 is a diagram of a structure of a network device according to an embodiment of this application.

### DESCRIPTION OF EMBODIMENTS

The following describes embodiments of this application with reference to the accompanying drawings in embodiments of this application.

The technical solutions provided in this application may be used in various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, or a new radio access technology (new radio access technology, NR) system. The 5G mobile communication system may include non-standalone (non-standalone, NSA) and/or standalone (standalone, SA).

The technical solutions provided in this application may be further used in machine type communication (machine type communication, MTC), long term evolution-machine (long term evolution-machine, LTE-M), a device to device (device to device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. A V2X communication system is a sidelink (sidelink, SL) transmission technology that is based on D2D communication.

The technical solutions provided in this application may be further used in a future communication system, for example, a sixth generation mobile communication system.

FIG. 2 is a diagram of a structure of a communication system 100 that is applicable to an embodiment of this application. The communication system 100 includes a network device 111, a network device 112, a terminal device 101, a terminal device 102, a terminal device 103, and a terminal device 104. It should be understood that the communication system 100 may include more or fewer network devices and more or fewer terminal devices. The network device and the terminal device may be hardware, or software obtained through functional division, or a combination thereof. The network device 111 and the network device 112, and the terminal device 101 to the network device 104 may communicate with each other through another device or network element. In the system, the network device 111 and the network device 112 may perform data transmission with the plurality of terminal devices: the terminal device 101 to the network device 104. For example, the network device 111 sends downlink data to the terminal device 101 to the terminal device 104, and the terminal device 101 to the terminal device 104 may also send uplink data to the network device 111. In addition, the terminal device 101, the terminal device 102, the terminal device 103, and the terminal device 104 may also form a communication system. In the system, the network device 111 may send downlink data to the terminal device 101 and the terminal device 104, and then the terminal device 104 sends the downlink data to the terminal device 102 or the terminal device 103. Methods in embodiments of this application may be used on the communication system 100 shown in FIG. 2.
(1) Terminal device: A terminal device includes a device that provides voice and/or data connectivity to a user. Specifically, the terminal device includes a device that provides voice to a user, or includes a device that provides data connectivity to a user, or includes a device that provides voice and data connectivity to a user. For example, the terminal device may include a processing device connected to a wireless modem. The terminal device may communicate with a core network through a radio access network (radio access network, RAN), exchange voice or data with the RAN, or interact with the RAN for voice and data. The terminal device may include a flying device (for example, an uncrewed aerial vehicle (Uncrewed Aerial Vehicle, UAV)), a high-altitude device (for example, a device at a specific altitude above the ground), a user equipment (user equipment, UE), a wireless terminal device, a mobile terminal device, a device to device (device to device, D2D) terminal device, a vehicle, a vehicle-mounted device, a vehicle to everything (vehicle to everything, V2X) terminal device, a machine to machine/machine type communication (machine to machine/machine type communication, M2M/MTC) terminal device, an internet of things (internet of things, IoT) terminal device, a light terminal device (light UE), a reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like.

In embodiments of this application, the terminal device may further include a relay (relay). Alternatively, it is understood as that any device that can perform data communication with a network device (for example, a base station) may be considered as a terminal device.

In embodiments of this application, an apparatus configured to implement a function of the terminal device may be a terminal device, or may be an apparatus that can support a terminal device to implement the function, for example, a chip system. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal device.

(2) Network device: A network device, including, for example, an access network (access network, AN) device such as a base station (for example, an access point), may be a device that communicates with a wireless terminal device through one or more cells over an air interface in an access network. Alternatively, the network device is, for example, a road side unit (road side unit, RSU) in a vehicle to everything (vehicle to everything, V2X) technology. The base station may be configured to perform mutual conversion between received over-the-air frames and IP packets, to serve as a router between the terminal device and a remaining part of the access network. The remaining part of the access network may include an IP network. The RSU may be a fixed infrastructure entity supporting a V2X application, and may exchange messages with another entity supporting the V2X application. The network device may further coordinate management of attributes of air interfaces. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, or may include a next generation nodeB (next generation nodeB, gNB) in a 5th generation (5th generation, 5G) mobile communication technology NR system (also referred to as an NR system for short), or may include a central unit (central unit, CU) and a distributed unit (distributed unit, DU) in a cloud access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus that can support a network device to implement the function, for example, a chip system. The apparatus may be installed in the network device. In the technical solutions provided in embodiments of this application, the network device is used for implementation.

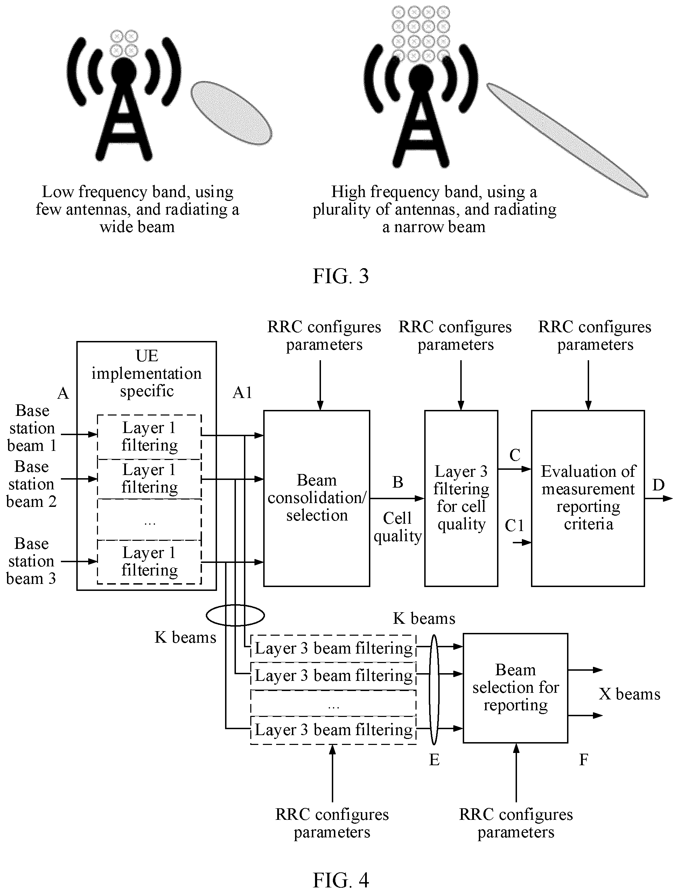

In embodiments of this application, an antenna technology used for communication between the network device and the terminal device is not limited herein. Optionally, a beamforming (beamforming) technology may be introduced in this application. There is a power loss when electromagnetic waves propagate through the air. In addition, a higher frequency of the electromagnetic waves indicates a larger loss and accordingly a smaller coverage area. Therefore, a multiple-antenna technology may be used to increase the coverage area. In the multiple-antenna technology, due to interference and diffraction characteristics of electromagnetic waves, energy in some directions is enhanced while energy in some directions is weakened after signals with different amplitudes and different phases sent by different antennas are superimposed. In this case, the electromagnetic waves radiate into a beam that is narrow in width and faces a specific direction. To utilize the feature of the plurality of antennas, a beam forming process is intervened to form a beam that is of a desired width and in a desired direction. This is beamforming (beamforming). As shown in FIG. 3, when the beamforming technology is used, good wireless connectivity can be maintained, mainly including serving beam selection and beam failure recovery.

Load balancing in a cellular network is implemented by using a handover, a redirection mechanism in a case of radio resource control (Radio resource control, RRC) releasing, inter-frequency and inter-RAT absolute priorities, and the like. Specifically, a terminal device needs to send a measurement report to a network device. For a target, there are at least three criteria for reporting a measurement report: measurement event-triggered reporting, periodic reporting, and periodic time-triggered reporting. A measurement event mainly includes A1, A2, A3, A4, A5, and the like, and H1 and H2 that are related to an uncrewed aerial vehicle. A1 indicates that the serving cell becomes better than a threshold. This event may be used to stop measurement performed for some cells. A2 indicates that the serving cell becomes worse than a threshold. This event may be used to start measurement for a cell, because an operation such as a handover may be triggered after this event is triggered. A3 indicates that signal quality of a neighboring cell becomes better than that of the serving cell by an offset. This event may be used to determine whether a UE is handed over to the neighboring cell. A4 indicates that a neighboring cell becomes better than a threshold. A5 indicates that the serving cell becomes worse than a threshold while a neighboring cell becomes better than a threshold. H1 indicates that the aerial UE altitude becomes higher than a threshold. H2 indicates that the aerial UE altitude becomes lower than a threshold.

A mechanism of measurement event-triggered reporting is as follows: If a layer 3 filtering result of a cell during a time to trigger (trigger to time, TTT) always meets a corresponding trigger event, a terminal device (for example, a UE) adds the cell to a cellsTriggeredList (cellsTriggeredList), and sends a measurement report for a cell in the cellsTriggeredList (cellsTriggeredList). For ease of understanding, the following provides descriptions with reference to FIG. 4. A process from a terminal device measuring beams to the terminal device reporting a measurement report includes the following procedures.
A: a beam measurement result internal to a physical layer.
A1: an output of layer 1 filtering. Specific filtering is UE implementation dependent.

Beam consolidation/selection (Beam consolidation/selection): Beam-specific measurement quantities are consolidated to derive cell quality.
B: cell quality derived from beam-specific measurement quantities after beam selection/consolidation.
C: a measurement quantity obtained after layer 3 filtering.
C1: an input used in event evaluation.

Formula for layer 3 filtering: Fₙ = (1- a) × *F*_{*n-*1} + a × Mn, where Mn is a latest measurement result received from the physical layer, Fn is a filtered measurement result to be updated, and *F*_{*n*-1} is an old filtered measurement result.
D: a measurement report sent over an air interface.
E: a measurement quantity obtained after beam filtering.
F: a beam measurement report sent over an air interface.

The foregoing describes the scenario, architecture, related technology, and the like used in embodiments of this application. The following specifically describes beam measurement, cell measurement, measurement report reporting, and the like.

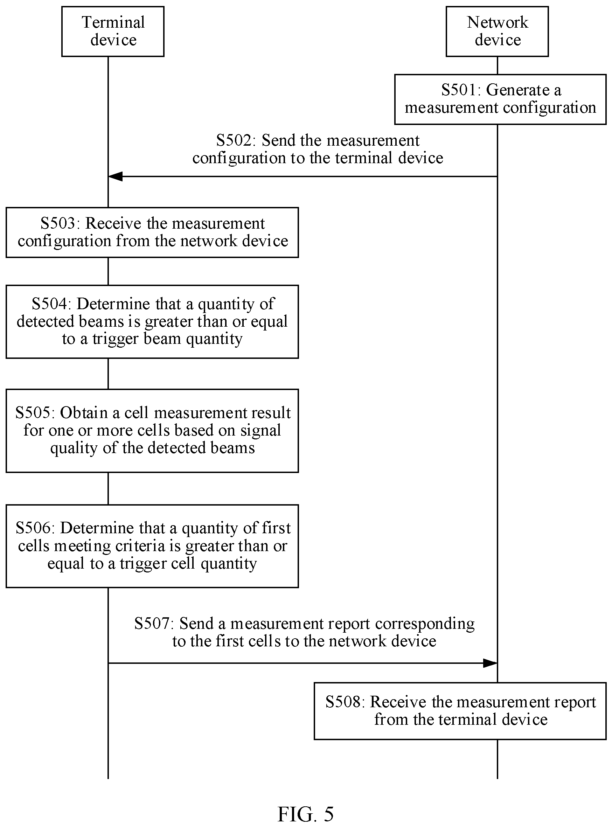

FIG. 5 shows a method for measuring signal quality according to an embodiment of the present invention. The method may be used on the communication system 100 shown in FIG. 2 or another system. An example is used, in which the method is implemented by a network device and a terminal device. The method includes but is not limited to the following steps.

Step S501: A network device generates a measurement configuration.

Specifically, the measurement configuration (measurement configuration) indicates a related configuration for measurement and reporting, for example, indicating one or more of the following items.

Measurement object: A measurement object is an object that needs to be measured. For example, for a 5G scenario, a measurement object may include a cell-specific offset, a blocklisted cell to be ignored, a trustlisted cell to consider for measurement, and the like. The measurement object herein is an object measured by a terminal device (for example, a UE). For example, the measurement object may include one or more of a synchronization signal and physical broadcast channel (physical broadcast channel, PBCH) block (synchronization signal and PBCH block, SSB) frequency, an SSB subcarrier spacing, an SSB-based measurement timing configuration (SSB-based measurement timing configuration, SMTC), a trustlisted cell, a blocklisted cell, and the like. Certainly, the measurement object is not limited to the several examples listed herein.

Reporting configuration: A reporting configuration includes a criterion that triggers reporting of a measurement report, and a format of a measurement report. Reporting may be periodic or event-triggered. Usually, how reporting (or reporting) should be performed is specified.

Measurement ID: A measurement ID may be a combination of a measurement object and a reporting configuration. As a collection, a measurement ID identifies how a measurement result of a specific object is reported.

Measurement quantity configuration: A measurement quantity configuration is used to specify a measurement quantity and a layer 3 filtering coefficient for new radio (New Radio, NR) measurement and inter-RAT measurement.

Measurement gap (GAP): A measurement gap is a period of time that allows a terminal device (for example, a UE) to leave a current frequency to perform measurement on another frequency, and is used only in a case of inter-frequency measurement or inter-RAT measurement.

In this embodiment of this application, the measurement configuration may include a trigger beam quantity. The trigger beam quantity is a beam quantity threshold that triggers generation of a cell measurement result. The beam quantity threshold may be understood as a lower limit. In this case, when a quantity of available (or detected) beams is greater than or equal to the trigger beam quantity, a terminal device (for example, a UE or a UAV) generates a cell measurement result.

Optionally, the network device may configure the trigger beam quantity in any one of the following manners.

Manner 1: The network device obtains flight status information of the terminal device, for example, receives the flight status information from the terminal device, and then determines, based on the flight status information, whether a flight status of the terminal device exceeds a range specified in flight reference information. If the flight status of the terminal device exceeds the range specified in the flight reference information, the network device configures the trigger beam quantity. Specifically, the network device may configure the trigger beam quantity in the measurement configuration. The flight status herein includes one or more of a flight altitude, a flight speed, a flight location, or a flight path. In the flight reference information, a corresponding range is defined, for example, a flight altitude range, a flight speed range, a flight location range, or a flight path range. These ranges can reflect, to some extent, whether the terminal device is at a high altitude, for example, a flight altitude of over 10 meters, a flight speed of over 5 meters/second, a flight range being a location that a terrestrial terminal cannot reach, or a flight path with a large change in a vertical direction. Therefore, in this embodiment of this application, by comparing one or more of the flight altitude, flight speed, flight location, or flight path of the terminal device with the flight reference information, it can be determined whether the terminal device is at a high altitude or is in a high-altitude flight state. If the terminal device is at a high altitude or is in the high-altitude flight state, it can be determined that the terminal device is a device operating in the air such as a UAV.

Further, the network device configures the trigger beam quantity based on the flight status information. It can be understood that a specific piece of information or specific pieces of information that is or are included in the flight status information and based on which the network device determines the trigger beam quantity, or specific pieces of information in the flight status information that are reported by the terminal device, may depend on a specific scenario and an actual requirement. In this embodiment of this application, neither of the following is limited: how the trigger beam quantity is determined based on the flight status information, and a specific value of the trigger beam quantity. In addition, the flight status may further include another parameter that can determine a status or type of the terminal device. Therefore, according to this manner, a cellular network can meet requirements of more scenarios, improving flexibility of communication.

For example, the network device may use the flight status as a basis for how the trigger beam quantity is configured. For example, which value should the trigger beam quantity be configured to? Should the trigger beam quantity be configured to 10, 50, or another value? In this embodiment of this application, the flight status of the terminal device may be analyzed, to preliminarily estimate a quantity of cells that can be measured by the terminal device. For example, if it is learned, through analysis performed based on the flight status, that the terminal device is at a high altitude, and that there are a large quantity of base stations on the ground below the high altitude, it can be preliminarily determined that beams of a large quantity of cells can be measured by the terminal device. Therefore, when a trigger beam quantity is configured for the terminal device, the trigger beam quantity may be configured to a large value. On the contrary, if it is learned, through analysis performed based on the flight status, that the terminal device is at a high altitude, and that there are a small quantity of base stations on the ground below the high altitude, it can be preliminarily determined that beams of a small quantity of cells can be measured by the terminal device. Therefore, when a trigger beam quantity is configured for the terminal device, the trigger beam quantity may be configured to a small value.

For example, if the flight status includes the flight path, the network device may infer a subsequent flight path of the terminal device based on the known flight path, and configure different trigger beam quantities for different points on the subsequent flight path. For example, if there are a large quantity of network devices (for example, base stations) near some points, a larger trigger beam quantity may be configured, or if there are a small quantity of network devices (for example, base stations) near some points, a smaller trigger beam quantity may be configured.

It can be understood that the trigger beam quantity may be alternatively configured to 0 in some cases.

Optionally, on the network device, the flight status information may also be used as a basis for whether a trigger beam quantity is to be configured. After it is determined, based on the flight status information, that a trigger beam quantity is to be configured, a trigger beam quantity to be configured is determined based on the specific flight status information.

Manner 2: The network device configures the trigger beam quantity in the measurement configuration, and additionally sends indication information and flight reference information to the terminal device. The indication information is used to indicate to use the trigger beam quantity when a flight status exceeds a range specified in the flight reference information. In other words, the network device configures one or more trigger beam quantities for the terminal device, and the terminal device determines a specific trigger beam quantity to be used. In a possible manner, the terminal device determines, based on the reference information sent by the network device, the specific trigger beam quantity to be used. It is also possible that, after the terminal device makes a decision based on a related parameter before using a trigger beam quantity, a trigger beam quantity finally selected for use is different from the trigger beam quantity carried in the measurement configuration. Therefore, after receiving the measurement configuration, the indication information, and the flight reference information, the terminal device determines whether a flight status is within the range specified in the flight reference information. If the flight status is within the range specified in the flight reference information, the terminal device uses the trigger beam quantity, for example, performs step S504 in subsequent measurement. If the flight status is not within the range specified in the flight reference information, the terminal device does not perform step S504 in subsequent measurement. In this manner, after the indication information and the flight reference information are obtained from the network device, a corresponding trigger beam quantity can be selected for use based on the indication information and the flight reference information. According to this manner, a cellular network can meet requirements of more scenarios, improving flexibility of communication.

In this manner, the network device may generate a plurality of trigger beam quantities, and subsequently, the terminal selects a corresponding trigger beam quantity based on a requirement, or a status of the terminal device such as a location or a speed. For example, the network device generates trigger beam quantities corresponding to a plurality of different points in advance, with the trigger beam quantities for the different points being different. Subsequently, the terminal detects its own flight path, and when reaching one of the points, selects the trigger beam quantity corresponding to the point, for use in subsequent step S504.

In an optional solution, the trigger beam quantity may alternatively not be determined based on the flight status, but may be determined based on other information, for example, a related parameter on a network device side or another parameter on a terminal device side.

Optionally, on the terminal device, the flight status may also be used as a basis for whether use of a trigger beam quantity is to be triggered.

Step S502: The network device sends the measurement configuration to the terminal device.

Specifically, the measurement configuration may be sent to the terminal device in a manner of broadcasting or unicasting or in another manner. A specific sending manner is not limited herein.

Step S503: The terminal device receives the measurement configuration from the network device.

The terminal device obtains, based on the measurement configuration received from the network device, a related configuration required for performing cell measurement, and starts measurement. For use of a trigger beam quantity, the following lists examples of several possible cases.

Case 1: If the network device configures a trigger beam quantity in the manner 1, because the trigger beam quantity is a trigger beam quantity that is appropriate for a current flight status of the terminal device and that is determined by the network device, the terminal device may directly use the trigger beam quantity when performing a subsequent operation, for example, performing step S504.

Optionally, it is also possible that a trigger beam quantity is not determined by the network device based on a flight status of the terminal device. In this case, after obtaining a trigger beam quantity through parsing, the terminal device may also directly use the trigger beam quantity when performing a subsequent operation.

Optionally, it is also possible that, after obtaining a trigger beam quantity through parsing, the terminal device performs a corresponding determining operation based on another parameter obtained by the terminal device, to determine whether the trigger beam quantity obtained by parsing the measurement configuration is finally used.

It should be noted that, whether the terminal needs to perform the determining operation, how the terminal uses the trigger beam quantity, and when the terminal uses the trigger beam quantity may all be indicated by the network device by delivering a configuration, or may be predefined in a protocol. This is not limited herein.

Case 2: If the network device configures a trigger beam quantity in the manner 2, because the network device does not analyze or determine a flight status of the terminal device when configuring the trigger beam quantity, the terminal device needs to determine whether it is appropriate for the terminal device to use the trigger beam quantity. For example, the terminal device determines whether its flight status exceeds the range specified in the flight reference information. If the flight status of the terminal device exceeds the range specified in the flight reference information, the terminal device uses the trigger beam quantity when, for example, performing subsequent step S504.

Optionally, a specific implementation and a specific policy may be configured by the network device. For example, the indication information and the flight reference information are received from the network device. The indication information is used to indicate to use the trigger beam quantity when a flight status exceeds the range specified in the flight reference information. To be specific, the terminal device performs the foregoing determining based on an indication from the network device.

Optionally, a specific implementation and a specific policy may be defined in a protocol. To be specific, the following is defined in the protocol: The trigger beam quantity is used when a flight status exceeds the range specified in the flight reference information. Therefore, the terminal device performs the foregoing determining based on a stipulation in the protocol.

Step S504: The terminal device determines that a quantity of detected beams is greater than or equal to the trigger beam quantity.

The detected beams mentioned herein may also be described as available beams. The detected beams may be beams detected before layer 1 filtering (for example, in a phase A in FIG. 4), or beams detected after layer 1 filtering (for example, in a phase A1 in FIG. 4), or beams detected after layer 3 filtering (for example, in a phase E in FIG. 4), or beams detected during beam selection/consolidation (for example, during a phase "beam consolidation/selection" in FIG. 4).

Therefore, that the terminal device determines whether a quantity of detected beams is greater than or equal to the trigger beam quantity includes at least:
if it is determined that a quantity of beams detected before layer 1 filtering (for example, in the phase A in FIG. 4) is greater than or equal to the trigger beam quantity, performing step S505 subsequently, or if it is determined that a quantity of beams detected before layer 1 filtering (for example, in the phase A in FIG. 4) is less than the trigger beam quantity, stopping a current measurement operation, and therefore skipping performing step S505 subsequently;
   or,
if it is determined that a quantity of beams detected after layer 1 filtering (for example, in the phase A1 in FIG. 4) is greater than or equal to the trigger beam quantity, performing step S505 subsequently, or if it is determined that a quantity of beams detected after layer 1 filtering (for example, in the phase A1 in FIG. 4) is less than the trigger beam quantity, stopping a current measurement operation, and therefore skipping performing step S505 subsequently;
   or,
if it is determined that a quantity of beams detected after layer 3 beam filtering (for example, in the phase E in FIG. 4) is greater than or equal to the trigger beam quantity, performing step S505 subsequently, or if it is determined that a quantity of beams detected after layer 3 beam filtering (for example, in the phase E in FIG. 4) is less than the trigger beam quantity, stopping a current measurement operation, and therefore skipping performing step S505 subsequently, where optionally, for this case, the phase "beam consolidation/selection" may be arranged to be performed after layer 3 filtering;
   or,
if it is determined that a quantity of beams detected during beam selection/consolidation (for example, during the phase "beam consolidation/selection" in FIG. 4) (for example, beams greater than a beam consolidation threshold) is greater than or equal to the trigger beam quantity, performing step S505 subsequently, or if it is determined that a quantity of beams detected during beam selection/consolidation (for example, during the phase "beam consolidation/selection" in FIG. 4) is less than the trigger beam quantity, stopping a current measurement operation, and therefore skipping performing step S505 subsequently.

In an optional solution, the quantity of the detected beams mentioned above may be a quantity of beams measured by a first type of antenna and/or a second type of antenna. Therefore, there are the following possible solutions for comparison with the trigger beam quantity.

For example, the terminal device is configured (or equipped) with the first type of antenna and the second type of antenna. The terminal device determines a quantity of beams detected by the first type of antenna, to obtain a first quantity result, and determines a quantity of beams measured by the second type of antenna, to obtain a second quantity result. If either of the first quantity result and the second quantity result is greater than or equal to the trigger beam quantity, it is determined that the quantity of the detected beams is greater than or equal to the trigger beam quantity.

For another example, the terminal device may alternatively determine only a quantity of beams detected by one of the two types of antennas, and then compares the quantity with the trigger beam quantity. In this way, it is determined whether the quantity of the detected beams is greater than or equal to the trigger beam quantity.

For another example, alternatively, the first quantity result and the second quantity result may be added up to obtain a sum. If the sum is greater than or equal to the trigger beam quantity, it is determined that the quantity of the detected beams is greater than or equal to the trigger beam quantity.

Optionally, the first type of antenna may be a directional antenna, and the second type of antenna may be an omnidirectional antenna.

In this embodiment of this application, when determining whether the quantity of the detected beams is greater than or equal to the trigger beam quantity, the terminal device may perform determining at a per-cell granularity or at a per-terminal device granularity. The following separately describes the two manners.

For the per-terminal device granularity, a sum of quantities of beams of a plurality of cells corresponding to the terminal device (for example, cells that can be detected) is compared with the trigger beam quantity. To be specific, a total quantity of all beams detected by the terminal is compared with the trigger beam quantity, equivalent to a comparison between a beam quantity at a terminal device level and the trigger beam quantity.

For the per-cell granularity, a quantity of beams of each of the plurality of cells is compared with the trigger beam quantity. To be specific, comparison is performed for a plurality of times. A quantity of detected second cells is compared with the trigger beam quantity, where the second cell is any one of the plurality of cells. The comparison is equivalent to a comparison between a beam quantity at a cell level and the trigger beam quantity.

It should be noted that a specific granularity at which determining is performed is not limited in this embodiment of this application. For example, the terminal device may determine, based on an indication from the network device, to perform determining at the per-cell granularity or at the per-terminal device granularity, or the terminal device may select, based on an actual requirement, to perform determining at the per-cell granularity or at the per-terminal device granularity, or it may be agreed on in advance that determining is performed at the per-cell granularity or at the per-terminal device granularity.

Step S505: The terminal device obtains a cell measurement result for one or more cells based on signal quality of the detected beams.

The obtaining herein may also be referred to as generating, deducing, deriving, or the like.

If the terminal device performs comparison for a quantity of beams at the per-terminal device granularity, when determining that a sum of quantities of detected beams of cells is greater than the trigger beam quantity, the terminal device obtains a cell measurement result for the cells one by one in this step. For example, the terminal device obtains a cell measurement result for one of the cells based on signal quality of beams of the cell, and for all the other cells of the cells, the terminal device obtains a cell measurement result for the cells in this manner. Certainly, when determining that a sum of quantities of detected beams of cells is not greater than the trigger beam quantity, the terminal device does not obtain a cell measurement result for the plurality of cells.

If the terminal device performs comparison for a quantity of beams at the per-cell granularity, when determining that a quantity of detected beams of a second cell is greater than the trigger beam quantity, the terminal device obtains a cell measurement result for the second cell based on signal quality of the beams of the second cell. Operations performed for each of the plurality of cells are the same as the operations performed for the second cell. The terminal device performs operations in this manner until the terminal device has performed similar operations for each cell. Certainly, if a quantity/quantities of beams of one/some of the cells is/are less than the trigger beam quantity, the terminal device does not obtain a cell measurement result for the cell/cells.

In a possible implementation, the cell measurement result mentioned herein includes cell signal quality, for example, a result in a phase B shown in FIG. 4 or a result in a phase C shown in FIG. 4.

Optionally, if the comparison with the trigger beam quantity is performed before layer 1 filtering (that is, in the phase A shown in FIG. 4), and the quantity of the detected beams is less than the trigger beam quantity, the subsequent phases A1, E, and beam consolidation/selection are not performed. Therefore, there is no operation of obtaining signal quality in the phase B or phase C, that is, there is no operation of obtaining a cell measurement result.

Optionally, if the comparison with the trigger beam quantity is performed after layer 1 filtering (that is, in the phase A1 shown in FIG. 4), and the quantity of the detected beams is less than the trigger beam quantity, the subsequent phases E and beam consolidation/selection are not performed. Therefore, there is no operation of obtaining signal quality in the phase B or phase C, that is, there is no operation of obtaining a cell measurement result.

Optionally, if the comparison with the trigger beam quantity is performed after layer 3 beam filtering (that is, in the phase E shown in FIG. 4), and the quantity of the detected beams is less than the trigger beam quantity, the phase beam consolidation/selection is not performed. Therefore, there is no operation of obtaining signal quality in the phase B or phase C, that is, there is no operation of obtaining a cell measurement result.

Optionally, if the comparison with the trigger beam quantity is performed during beam selection/consolidation (that is, during the phase "beam consolidation/selection" shown in FIG. 4), and the quantity of the detected beams is less than the trigger beam quantity, there is no operation of obtaining signal quality in the phase B or phase C, that is, there is no operation of obtaining a cell measurement result.

In this implementation, the detected beams may be detected before layer 1 filtering, after layer 1 filtering, after layer 3 beam filtering, or during beam selection/consolidation. When it is determined whether the quantity of the detected beams is greater than or equal to the trigger beam quantity, any one or more of the quantities of the beams detected in the several phases may be compared with the trigger beam quantity. Comparison results can all reflect a signal status of a cell to some extent. It can be understood that trigger beam quantities configured or preset for different phases may be different.

In this embodiment of this application, it is possible that a cell measurement result is finally obtained for each of a plurality of cells, and it is also possible that, because a criterion for the trigger beam quantity is not met, a cell measurement result is obtained only for some of the cells, or even no cell measurement result is obtained for any cell. It should be noted that, after a cell measurement result is obtained for some cells, measurement reporting or another operation may be triggered based on the cell measurement results of the cells. A specific operation that is performed based on the cell measurement results is not limited herein.

Optionally, after a cell measurement result is obtained for a corresponding cell, steps S506 and S507 may be further performed, to complete reporting of a measurement report.

Step S506: The terminal device determines that a quantity of first cells meeting criteria is greater than or equal to a trigger cell quantity.

Specifically, if a cell measurement result is obtained for all or some of the plurality of cells, the cell measurement results of the cells may be further processed. For example, a cell measurement result of a cell is input into a phase "evaluation of measurement reporting criteria" shown in FIG. 4 for processing, thus determining whether the cell meets the criteria. A similar operation may be performed on each cell with a cell measurement result. In this way, it is determined whether each cell meets the criteria. For ease of description, a cell meeting the criteria may be referred to as a first cell.

The trigger cell quantity is a cell quantity threshold that triggers reporting of a measurement report. To be specific, a measurement report can be reported only when a quantity of cells meeting the criteria is greater than or equal to the cell threshold. For example, when a quantity of cells that all meet the criteria is greater than or equal to the cell threshold within a specified period of time or at a specified point in time, a measurement report is reported.

Optionally, meeting the criteria herein may mean meeting the reporting criteria, triggering the reporting criteria, or meeting a criterion for reporting a measurement event, for example, meeting a criterion for reporting an event A3.

Optionally, the trigger cell quantity may be carried in the measurement configuration, or may be sent to the terminal device by the network device but is not carried in the measurement configuration, or may be pre-configured in a protocol, so that the network device does not need to perform configuration or indication again.

The terminal device determines whether the quantity of the first cells is greater than or equal to the trigger cell quantity. If the quantity of the first cells is greater than or equal to the trigger cell quantity, step S507 is performed. If the quantity of the first cells is not greater than or equal to the trigger cell quantity, step S507 is not performed, that is, no measurement report is generated or reported.

Step S507: The terminal device sends a measurement report corresponding to the first cells to the network device.

A measurement report (Measurement Report) carries a cell measurement quantity of a first cell. Usually, there are a plurality of first cells. Therefore, a measurement report carries measurement quantities of a plurality of first cells. For example, the measurement quantities include one or more of the following: an RSRP, RSRQ, or an SINR.

Step S508: The network device receives the measurement report from the terminal device.

Specifically, the network device parses the measurement report, to obtain cell measurement quantities of the plurality of first cells. Optionally, the network device may make a decision on cell handover of the terminal device based on the cell measurement quantities of the plurality of first cells.

According to the foregoing method, the network device adds the trigger beam quantity to the measurement configuration. Correspondingly, when a quantity of detected beams is greater than or equal to the trigger beam quantity, a measurement result is generated for a corresponding cell. In this way, a frequency of reporting a measurement report for a cell can be reduced, saving communication resources.

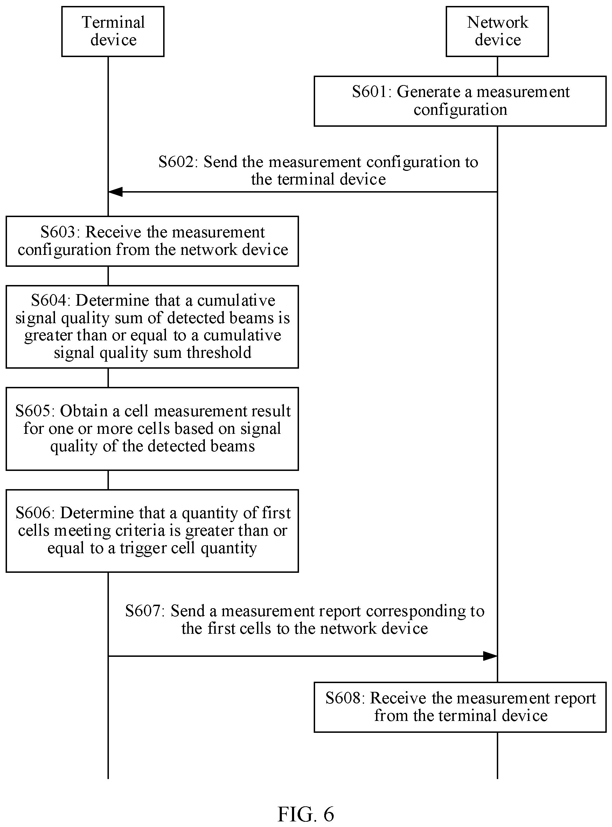

FIG. 6 shows a method for measuring signal quality according to an embodiment of the present invention. The method may be used on the communication system 100 shown in FIG. 2 or another system. An example is used, in which the method is implemented by a network device and a terminal device. The method includes but is not limited to the following steps.

Step S601: A network device generates a measurement configuration.

Specifically, the measurement configuration (measurement configuration) indicates a related configuration for measurement and reporting, for example, indicating one or more of a measurement object, a reporting configuration, a measurement ID, a measurement quantity configuration, or a measurement gap. For details, refer to related descriptions in the foregoing step S501 section.

In this embodiment of this application, the measurement configuration may include a cumulative signal quality sum threshold and a trigger cell quantity.

About the cumulative signal quality sum threshold:
The cumulative signal quality sum threshold is a cumulative signal quality sum threshold for beams that triggers generation of a cell measurement result. The cumulative signal quality sum threshold may be understood as a lower limit. In this case, when a cumulative signal quality sum of available (or detected) beams is greater than or equal to the cumulative signal quality sum threshold, a terminal device (for example, a UE or a UAV) generates a cell measurement result. Signal quality herein may include one or more of an RSRP, reference signal received quality (reference signal received quality, RSRQ), or a signal to interference plus noise ratio (signal to interference plus noise ratio, SINR).

Optionally, the network device may configure the cumulative signal quality sum threshold in any one of the following manners.

Manner 1: The network device obtains flight status information of the terminal device, for example, receives the flight status information from the terminal device, and then determines, based on the flight status information, whether a flight status of the terminal device exceeds a range specified in flight reference information. If the flight status of the terminal device exceeds the range specified in the flight reference information, the network device configures the cumulative signal quality sum threshold. Specifically, the network device may configure the cumulative signal quality sum threshold in the measurement configuration. The flight status herein includes one or more of a flight altitude, a flight speed, a flight location, or a flight path. In the flight reference information, a corresponding range is defined, for example, a flight altitude range, a flight speed range, a flight location range, or a flight path range. These ranges can reflect, to some extent, whether the terminal device is at a high altitude, for example, a flight altitude of over 10 meters, a flight speed of over 5 meters/second, a flight range being a location that a terrestrial terminal cannot reach, or a flight path with a large change in a vertical direction. Therefore, in this embodiment of this application, by comparing one or more of the flight altitude, flight speed, flight location, or flight path of the terminal device with the flight reference information, it can be determined whether the terminal device is at a high altitude or is in a high-altitude flight state. If the terminal device is at a high altitude or is in the high-altitude flight state, it can be determined that the terminal device is a device operating in the air such as a UAV.

Further, the network device configures the cumulative signal quality sum threshold based on the flight status information. It can be understood that a specific piece of information or specific pieces of information that is or are included in the flight status information and based on which the network device determines the cumulative signal quality sum threshold, or specific pieces of information in the flight status information that are reported by the terminal device, may depend on a specific scenario and an actual requirement. In this embodiment of this application, neither of the following is limited: how the cumulative signal quality sum threshold is determined based on the flight status information, and a specific value of the cumulative signal quality sum threshold. In addition, the flight status may further include another parameter that can determine a status or type of the terminal device. Therefore, according to this manner, a cellular network can meet requirements of more scenarios, improving flexibility of communication.

For example, the network device may use the flight status as a basis for how the cumulative signal quality sum threshold is configured. For example, which value should the cumulative signal quality sum threshold be configured to? Should the cumulative signal quality sum threshold be configured to -30 dBm, -10 dBm, or another value? In this embodiment of this application, the flight status of the terminal device may be analyzed, to preliminarily estimate a quantity of cells that can be measured by the terminal device. For example, if it is learned, through analysis performed based on the flight status, that the terminal device is at a high altitude, and that there are a large quantity of base stations on the ground below the high altitude, it can be preliminarily determined that beams of a large quantity of cells can be measured by the terminal device. Therefore, when a cumulative signal quality sum threshold is configured for the terminal device, the cumulative signal quality sum threshold may be configured to a large value. On the contrary, if it is learned, through analysis performed based on the flight status, that the terminal device is at a high altitude, and that there are a small quantity of base stations on the ground below the high altitude, it can be preliminarily determined that beams of a small quantity of cells can be measured by the terminal device. Therefore, when a cumulative signal quality sum threshold is configured for the terminal device, the cumulative signal quality sum threshold may be configured to a small value.

For example, if the flight status includes the flight path, the network device may infer a subsequent flight path of the terminal device based on the known flight path, and configure different cumulative signal quality sum thresholds for different points on the subsequent flight path. For example, if there are a large quantity of network devices (for example, base stations) near some points, a larger cumulative signal quality sum threshold may be configured, or if there are a small quantity of network devices (for example, base stations) near some points, a smaller cumulative signal quality sum threshold may be configured.

Optionally, on the network device, the flight status may also be used as a basis for whether a cumulative signal quality sum threshold is to be configured. Optionally, on the terminal device, the flight status may also be used as a basis for whether use of a cumulative signal quality sum threshold is to be triggered.

It can be understood that the cumulative signal quality sum threshold may be alternatively configured to 0 in some cases.

Manner 2: The network device configures the cumulative signal quality sum threshold in the measurement configuration, and additionally sends indication information and flight reference information to the terminal device. The indication information is used to indicate to use the cumulative signal quality sum threshold when a flight status exceeds a range specified in the flight reference information. In other words, the network device configures one or more cumulative signal quality sum thresholds for the terminal device, and the terminal device determines a specific cumulative signal quality sum threshold to be used. In a possible manner, the terminal device determines, based on the reference information sent by the network device, the specific cumulative signal quality sum threshold to be used. It is also possible that, after the terminal device makes a decision based on a related parameter before using a cumulative signal quality sum threshold, a cumulative signal quality sum threshold finally selected for use is different from the cumulative signal quality sum threshold carried in the measurement configuration. Therefore, after receiving the measurement configuration, the indication information, and the flight reference information, the terminal device determines whether a flight status is within the range specified in the flight reference information. If the flight status is within the range specified in the flight reference information, the terminal device uses the cumulative signal quality sum threshold, for example, performs step S604 in subsequent measurement. If the flight status is not within the range specified in the flight reference information, the terminal device does not perform step S604 in subsequent measurement. In this manner, after the indication information and the flight reference information are obtained from the network device, a corresponding cumulative signal quality sum threshold can be selected for use based on the indication information and the flight reference information. According to this manner, a cellular network can meet requirements of more scenarios, improving flexibility of communication.

In this manner, the network device may generate a plurality of cumulative signal quality sum thresholds, and subsequently, the terminal selects a corresponding cumulative signal quality sum threshold based on a requirement, or a status of the terminal device such as a location or a speed. For example, the network device generates cumulative signal quality sum thresholds corresponding to a plurality of different points in advance, with the cumulative signal quality sum thresholds for the different points being different. Subsequently, the terminal detects its own flight path, and when reaching one of the points, selects the cumulative signal quality sum threshold corresponding to the point, for use in subsequent step S604.

In an optional solution, the cumulative signal quality sum threshold may alternatively not be determined based on the flight status, but may be determined based on other information, for example, a related parameter on a network device side or another parameter on a terminal device side.

About the trigger cell quantity:
The trigger cell quantity is a cell quantity threshold that triggers reporting of a measurement report. To be specific, a measurement report can be reported only when a quantity of cells meeting criteria is greater than or equal to the cell threshold. For example, a measurement report can be reported only when a quantity of cells that all meet the criteria is greater than or equal to the cell threshold within a specified period of time or at a specified point in time.

Step S602: The network device sends the measurement configuration to the terminal device.

Specifically, the measurement configuration may be sent to the terminal device in a manner of broadcasting or unicasting or in another manner. A specific sending manner is not limited herein.

Step S603: The terminal device receives the measurement configuration from the network device.

The terminal device obtains, based on the measurement configuration received from the network device, a related configuration required for performing cell measurement, and starts measurement.

For use of a cumulative signal quality sum threshold, the following lists examples of several possible cases.

Case 1: If the network device configures a cumulative signal quality sum threshold in the manner 1, because the cumulative signal quality sum threshold is a cumulative signal quality sum threshold that is appropriate for a current flight status of the terminal device and that is determined by the network device, the terminal device may directly use the cumulative signal quality sum threshold when performing a subsequent operation, for example, performing step S604.

Optionally, it is also possible that a cumulative signal quality sum threshold is not determined by the network device based on a flight status of the terminal device. In this case, after obtaining a cumulative signal quality sum threshold through parsing, the terminal device may also directly use the cumulative signal quality sum threshold when performing a subsequent operation.

Optionally, it is also possible that, after obtaining a cumulative signal quality sum threshold through parsing, the terminal device performs a corresponding determining operation based on another parameter obtained by the terminal device, to determine whether the cumulative signal quality sum threshold obtained by parsing the measurement configuration is finally used.

It should be noted that, whether the terminal needs to perform the determining operation, how the terminal uses the cumulative signal quality sum threshold, and when the terminal uses the cumulative signal quality sum threshold may all be indicated by the network device by delivering a configuration, or may be predefined in a protocol. This is not limited herein.

Case 2: If the network device configures a cumulative signal quality sum threshold in the manner 2, because the network device does not analyze or determine a flight status of the terminal device when configuring the cumulative signal quality sum threshold, the terminal device needs to determine whether it is appropriate for the terminal device to use the cumulative signal quality sum threshold. For example, the terminal device determines whether its flight status exceeds the range specified in the flight reference information. If the flight status of the terminal device exceeds the range specified in the flight reference information, the terminal device uses the cumulative signal quality sum threshold when, for example, performing subsequent step S604.

Optionally, a specific implementation and a specific policy may be configured by the network device. For example, the indication information and the flight reference information are received from the network device. The indication information is used to indicate to use the cumulative signal quality sum threshold when a flight status exceeds the range specified in the flight reference information. To be specific, the terminal device performs the foregoing determining based on an indication from the network device.

Optionally, a specific implementation and a specific policy may be defined in a protocol. To be specific, the following is defined in the protocol: The cumulative signal quality sum threshold is used when a flight status exceeds the range specified in the flight reference information. Therefore, the terminal device performs the foregoing determining based on a stipulation in the protocol.

Step S604: The terminal device determines that a cumulative signal quality sum of detected beams is greater than or equal to the cumulative signal quality sum threshold.

The detected beams mentioned herein may also be described as available beams. The detected beams may be beams detected before layer 1 filtering (for example, in a phase A in FIG. 4), or beams detected after layer 1 filtering (for example, in a phase A1 in FIG. 4), or beams detected after layer 3 filtering (for example, in a phase E in FIG. 4), or beams detected during beam selection/consolidation (for example, during a phase "beam consolidation/selection" in FIG. 4).

Therefore, that the terminal device determines whether a cumulative signal quality sum of detected beams is greater than or equal to the cumulative signal quality sum threshold includes at least:
if it is determined that a cumulative signal quality sum of beams detected before layer 1 filtering (for example, in the phase A in FIG. 4) is greater than or equal to the cumulative signal quality sum threshold, performing step S605 subsequently, or if it is determined that a cumulative signal quality sum of beams detected before layer 1 filtering (for example, in the phase A in FIG. 4) is less than the cumulative signal quality sum threshold, stopping a current measurement operation, and therefore skipping performing step S605 subsequently;
   or,
if it is determined that a cumulative signal quality sum of beams detected after layer 1 filtering (for example, in the phase A1 in FIG. 4) is greater than or equal to the cumulative signal quality sum threshold, performing step S605 subsequently, or if it is determined that a cumulative signal quality sum of beams detected after layer 1 filtering (for example, in the phase A1 in FIG. 4) is less than the cumulative signal quality sum threshold, stopping a current measurement operation, and therefore skipping performing step S605 subsequently;
   or,
if it is determined that a cumulative signal quality sum of beams detected after layer 3 beam filtering (for example, in the phase E in FIG. 4) is greater than or equal to the cumulative signal quality sum threshold, performing step S605 subsequently, or if it is determined that a cumulative signal quality sum of beams detected after layer 3 beam filtering (for example, in the phase E in FIG. 4) is less than the cumulative signal quality sum threshold, stopping a current measurement operation, and therefore skipping performing step S605 subsequently, where optionally, for this case, the phase "beam consolidation/selection" may be arranged to be performed after layer 3 filtering;
   or,
if it is determined that a cumulative signal quality sum of beams detected during beam selection/consolidation (for example, during the phase "beam consolidation/selection" in FIG. 4) (for example, beams greater than a beam consolidation threshold) is greater than or equal to the cumulative signal quality sum threshold, performing step S605 subsequently, or if it is determined that a cumulative signal quality sum of beams detected during beam selection/consolidation (for example, during the phase "beam consolidation/selection" in FIG. 4) is less than the cumulative signal quality sum threshold, stopping a current measurement operation, and therefore skipping performing step S605 subsequently.

In an optional solution, the cumulative signal quality sum of the detected beams mentioned above may be a cumulative signal quality sum of beams measured by a first type of antenna and/or a second type of antenna. Therefore, there are the following possible solutions for comparison with the cumulative signal quality sum threshold.

For example, the terminal device is configured (or equipped) with the first type of antenna and the second type of antenna. The terminal device determines a cumulative signal quality sum of beams detected by the first type of antenna, to obtain a first cumulative result, and determines a cumulative signal quality sum of beams measured by the second type of antenna, to obtain a second cumulative result. If either of the first cumulative result and the second cumulative result is greater than or equal to the cumulative signal quality sum threshold, it is determined that the cumulative signal quality sum of the detected beams is greater than or equal to the cumulative signal quality sum threshold.

For another example, the terminal device may alternatively determine only a cumulative signal quality sum of beams detected by one of the two types of antennas, and then compares the cumulative signal quality sum with the cumulative signal quality sum threshold. In this way, it is determined whether the cumulative signal quality sum of the detected beams is greater than or equal to the cumulative signal quality sum threshold.

For another example, alternatively, the first cumulative result and the second cumulative result may be added up to obtain a sum. If the sum is greater than or equal to the cumulative signal quality sum threshold, it is determined that the cumulative signal quality sum of the detected beams is greater than or equal to the cumulative signal quality sum threshold.

Optionally, the first type of antenna may be a directional antenna, and the second type of antenna may be an omnidirectional antenna.

In this embodiment of this application, when determining whether the cumulative signal quality sum of the detected beams is greater than or equal to the cumulative signal quality sum threshold, the terminal device may perform determining at a per-cell granularity or at a per-terminal device granularity. The following separately describes the two manners.

For the per-terminal device granularity, a cumulative signal quality sum of beams of a plurality of cells corresponding to the terminal device (for example, cells that can be detected) is compared with the cumulative signal quality sum threshold. To be specific, a cumulative signal quality sum of all beams detected by the terminal is compared with the cumulative signal quality sum threshold, equivalent to a comparison between a cumulative signal quality sum of beams at a terminal device level and the cumulative signal quality sum threshold.

For the per-cell granularity, a cumulative signal quality sum of beams of each of the plurality of cells is compared with the cumulative signal quality sum threshold. To be specific, comparison is performed for a plurality of times. A cumulative signal quality sum of detected second cells is compared with the cumulative signal quality sum threshold, where the second cell is any one of the plurality of cells. The comparison is equivalent to a comparison between a cumulative signal quality sum of beams at a cell level and the cumulative signal quality sum threshold.

It should be noted that a specific granularity at which determining is performed is not limited in this embodiment of this application. For example, the terminal device may determine, based on an indication from the network device, to perform determining at the per-cell granularity or at the per-terminal device granularity, or the terminal device may select, based on an actual requirement, to perform determining at the per-cell granularity or at the per-terminal device granularity, or it may be agreed on in advance that determining is performed at the per-cell granularity or at the per-terminal device granularity.

Step S605: The terminal device obtains a cell measurement result for one or more cells based on signal quality of the detected beams.

The obtaining herein may also be referred to as generating, deducing, deriving, or the like.

If the terminal device performs comparison for a quantity of beams at the per-terminal device granularity, when determining that a cumulative signal quality sum of detected beams of cells is greater than the cumulative signal quality sum threshold, the terminal device obtains a cell measurement result for each of the cells in this step. For example, the terminal device obtains a cell measurement result for one of the cells based on signal quality of beams of the cell, and for all the other cells of the cells, the terminal device obtains a cell measurement result for the cells in this manner. Certainly, when determining that a cumulative signal quality sum of detected beams of cells is not greater than the cumulative signal quality sum threshold, the terminal device does not obtain a cell measurement result for the plurality of cells.

If the terminal device performs comparison for a cumulative signal quality sum of beams at the per-cell granularity, when determining that a cumulative signal quality sum of detected beams of a second cell is greater than the cumulative signal quality sum threshold, the terminal device obtains a cell measurement result for the second cell based on signal quality of the beams of the second cell. Operations performed for each of the plurality of cells are the same as the operations performed for the second cell. The terminal device performs operations in this manner until the terminal device has performed similar operations for each cell. Certainly, if a cumulative signal quality sum/cumulative signal quality sums of beams of one/some of the cells is/are less than the cumulative signal quality sum threshold, the terminal device does not obtain a cell measurement result for the cell/cells.

**In** a possible implementation, the cell measurement result mentioned herein includes cell signal quality, for example, a result in a phase B shown in FIG. 4 or a result in a phase C shown in FIG. 4.

Optionally, if the comparison with the cumulative signal quality sum threshold is performed before layer 1 filtering (that is, in the phase A shown in FIG. 4), and the cumulative signal quality sum of the detected beams is less than the cumulative signal quality sum threshold, the subsequent phases A1, E, and beam consolidation/selection are not performed. Therefore, there is no operation of obtaining signal quality in the phase B or phase C, that is, there is no operation of obtaining a cell measurement result.

Optionally, if the comparison with the cumulative signal quality sum threshold is performed after layer 1 filtering (that is, in the phase A1 shown in FIG. 4), and the cumulative signal quality sum of the detected beams is less than the cumulative signal quality sum threshold, the subsequent phases E and beam consolidation/selection are not performed. Therefore, there is no operation of obtaining signal quality in the phase B or phase C, that is, there is no operation of obtaining a cell measurement result.

Optionally, if the comparison with the cumulative signal quality sum threshold is performed after layer 3 beam filtering (that is, in the phase E shown in FIG. 4), and the cumulative signal quality sum of the detected beams is less than the cumulative signal quality sum threshold, the phase beam consolidation/selection is not performed. Therefore, there is no operation of obtaining signal quality in the phase B or phase C, that is, there is no operation of obtaining a cell measurement result.

Optionally, if the comparison with the cumulative signal quality sum threshold is performed during beam selection/consolidation (that is, during the phase "beam consolidation/selection" shown in FIG. 4), and the cumulative signal quality sum of the detected beams is less than the cumulative signal quality sum threshold, there is no operation of obtaining signal quality in the phase B or phase C, that is, there is no operation of obtaining a cell measurement result.

In this implementation, the detected beams may be detected before layer 1 filtering, after layer 1 filtering, after layer 3 beam filtering, or during beam selection/consolidation. When it is determined whether the cumulative signal quality sum of the detected beams is greater than or equal to the cumulative signal quality sum threshold, any one or more of the cumulative signal quality sums of the beams detected in the several phases may be compared with the cumulative signal quality sum threshold. Comparison results can all reflect a signal status of a cell to some extent. It can be understood that cumulative signal quality sum thresholds configured or preset for different phases may be different.

In this embodiment of this application, layer 3 filtering may be designed as follows.

Design 1: The obtaining a cell measurement result for one or more cells based on signal quality of the detected beams may include:
obtaining a first cumulative signal quality sum of beams detected over a first time period; obtaining M second cumulative signal quality sums that correspond to beams detected over M time periods preceding the first time period, where M≥1; and then obtaining a cell or beam measurement result for the one or more cells based on statuses of the first cumulative signal quality sum and the M second cumulative signal quality sums, where the first time period herein may be a current time period, and the cell measurement result finally obtained is also a cell measurement result corresponding to the first time period.

For example, if the first cumulative signal quality sum is greater than the cumulative signal quality sum threshold, and the M second cumulative signal quality sums include a second cumulative signal quality sum that is greater than the cumulative signal quality sum threshold, a cell or beam measurement result is generated for the one or more cells based on signal quality of the beams detected over the first time period, and based on signal quality of beams detected over a time period that corresponds to the second cumulative signal quality sum greater than the cumulative signal quality sum threshold. In other words, during layer 3 filtering, only signal quality corresponding to a time period that meets a requirement of the cumulative signal quality sum threshold is considered. The signal quality may be signal quality of beams, or may be signal quality of a cell. To be specific, layer 3 filtering herein may be layer 3 filtering performed for a cell, or may be layer 3 filtering performed for beams.

For another example, if the first cumulative signal quality sum is greater than the cumulative signal quality sum threshold, and a second cumulative signal quality sum corresponding to a previous time period of the first time period is less than the cumulative signal quality sum threshold, a cell measurement result is generated for the one or more cells based on signal quality of the beams detected over the first time period. In other words, during layer 3 filtering, once a time period does not meet a requirement of the cumulative signal quality sum threshold, layer 3 filtering performed for an immediately following time period restarts. To be specific, signal quality corresponding to all time periods preceding the immediately following time period is no longer considered during layer 3 filtering performed for the immediately following time period. The signal quality may be signal quality of beams, or may be signal quality of a cell. To be specific, layer 3 filtering herein may be layer 3 filtering performed for a cell, or may be layer 3 filtering performed for beams.

Design 2: The obtaining a cell measurement result for one or more cells based on signal quality of the detected beams may include:
obtaining a first cumulative signal quality sum of beams detected over a first time period; and if the first cumulative signal quality sum is greater than the cumulative signal quality sum threshold, generating a cell measurement result for the one or more cells based on signal quality of the beams detected over the first time period, and based on signal quality of beams detected within a preset time range that precedes the first time period. In other words, duration of layer 3 filtering is limited by configuring the preset time range.

In this embodiment of this application, it is possible that a cell measurement result is finally obtained for each of a plurality of cells, and it is also possible that, because a criterion for the cumulative signal quality sum threshold is not met, a cell measurement result is obtained only for some of the cells, or even no cell measurement result is obtained for one of the cells. It should be noted that, after a cell measurement result is obtained for some cells, whether or how a measurement report is generated may be determined based on the cell measurement results of the cells, or the cell measurement results of the cells may be used for another operation. A specific operation that is performed based on the cell measurement results is not limited herein. Optionally, after a cell measurement result is obtained for a corresponding cell, steps S606 and S607 may be further performed, to complete reporting of a measurement report.

Step S606: The terminal device determines that a quantity of first cells meeting the criteria is greater than or equal to the trigger cell quantity.

For implementation of this step, refer to related explanations of step S506.

Step S607: The terminal device sends a measurement report corresponding to the first cells to the network device.

For implementation of this step, refer to related explanations of step S507.

Step S608: The network device receives the measurement report from the terminal device.

For implementation of this step, refer to related explanations of step S508.

According to the foregoing method, the network device adds the cumulative signal quality sum threshold and the trigger cell quantity to the measurement configuration. Correspondingly, when a cumulative signal quality sum of detected beams is greater than or equal to the cumulative signal quality sum threshold, the terminal device generates a measurement result for a corresponding cell. In this way, a frequency of reporting a measurement report for a cell can be reduced, saving communication resources. In addition, when a quantity of cells meeting the reporting criteria is greater than or equal to the trigger cell quantity, a measurement report is reported. Due to constraints of both the cumulative cell signal quality sum threshold and the trigger cell quantity, the frequency of reporting a measurement report for a cell is reduced, saving communication resources.

Optionally, the method shown in FIG. 5 may be alternatively implemented in combination with the cumulative signal quality sum threshold. In this case, in this embodiment of this application, step S504 and step S604 may be alternatively both used as a prerequisite for "obtaining a cell measurement result for one or more cells based on signal quality of the detected beams". To be specific, when determining that a quantity of detected beams is greater than or equal to the trigger beam quantity and that a cumulative signal quality sum of the detected beams is greater than or equal to the cumulative signal quality sum threshold, the terminal device performs the following operation: obtaining a cell measurement result for one or more cells based on signal quality of the detected beams. According to this implementation, overheads that the terminal device uses for measurement can be further reduced, and the frequency of reporting a measurement report can be decreased, further saving communication resources.

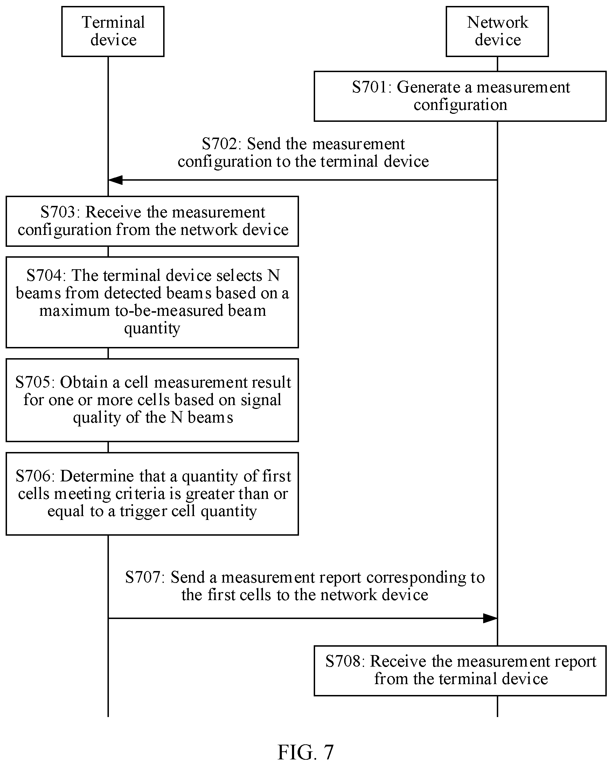

FIG. 7 shows a method for measuring signal quality according to an embodiment of the present invention. The method may be used on the communication system 100 shown in FIG. 2 or another system. An example is used, in which the method is implemented by a network device and a terminal device. The method includes but is not limited to the following steps.

Step S701: A network device generates a measurement configuration.

Specifically, the measurement configuration (measurement configuration) indicates a related configuration for measurement and reporting, for example, indicating one or more of a measurement object, a reporting configuration, a measurement ID, a measurement quantity configuration, or a measurement gap. For details, refer to related descriptions in the foregoing step S501 section.

In this embodiment of this application, the measurement configuration may include a maximum to-be-measured beam quantity. The maximum to-be-measured beam quantity is an upper quantity limit of beams that need to be measured for triggering generation of a cell measurement result. Therefore, a terminal device (for example, a UE or a UAV) selects beams a quantity of which is not greater than the maximum to-be-measured beam quantity, for measurement.

Optionally, the network device may configure the cumulative signal quality sum threshold in any one of the following manners.

Manner 1: The network device obtains flight status information of the terminal device, for example, receives the flight status information from the terminal device, and then determines, based on the flight status information, whether a flight status of the terminal device exceeds a range specified in flight reference information. If the flight status of the terminal device exceeds the range specified in the flight reference information, the network device configures the maximum to-be-measured beam quantity. Specifically, the network device may configure the maximum to-be-measured beam quantity in the measurement configuration. The flight status herein includes one or more of a flight altitude, a flight speed, a flight location, or a flight path. In the flight reference information, a corresponding range is defined, for example, a flight altitude range, a flight speed range, a flight location range, or a flight path range. These ranges can reflect, to some extent, whether the terminal device is at a high altitude, for example, a flight altitude of over 10 meters, a flight speed of over 5 meters/second, a flight range being a location that a terrestrial terminal cannot reach, or a flight path with a large change in a vertical direction. Therefore, in this embodiment of this application, by comparing one or more of the flight altitude, flight speed, flight location, or flight path of the terminal device with the flight reference information, it can be determined whether the terminal device is at a high altitude or is in a high-altitude flight state. If the terminal device is at a high altitude or is in the high-altitude flight state, it can be determined that the terminal device is a device operating in the air such as a UAV.

Further, the network device configures the maximum to-be-measured beam quantity based on the flight status information. It can be understood that a specific piece of information or specific pieces of information that is or are included in the flight status information and based on which the network device determines the maximum to-be-measured beam quantity, or specific pieces of information in the flight status information that are reported by the terminal device, may depend on a specific scenario and an actual requirement. In this embodiment of this application, neither of the following is limited: how the maximum to-be-measured beam quantity is determined based on the flight status information, and a specific value of the maximum to-be-measured beam quantity. In addition, the flight status may further include another parameter that can determine a status or type of the terminal device. Therefore, according to this manner, a cellular network can meet requirements of more scenarios, improving flexibility of communication.

For example, the network device may use the flight status as a basis for how the maximum to-be-measured beam quantity is configured. For example, which value should the maximum to-be-measured beam quantity be configured to? Should the maximum to-be-measured beam quantity be configured to 10, 50, or another value? In this embodiment of this application, the flight status of the terminal device may be analyzed, to preliminarily estimate a quantity of cells that can be measured by the terminal device. For example, if it is learned, through analysis performed based on the flight status, that the terminal device is at a high altitude, and that there are a large quantity of base stations on the ground below the high altitude, it can be preliminarily determined that beams of a large quantity of cells can be measured by the terminal device. Therefore, when a maximum to-be-measured beam quantity is configured for the terminal device, the maximum to-be-measured beam quantity may be configured to a large value. On the contrary, if it is learned, through analysis performed based on the flight status, that the terminal device is at a high altitude, and that there are a small quantity of base stations on the ground below the high altitude, it can be preliminarily determined that beams of a small quantity of cells can be measured by the terminal device. Therefore, when a maximum to-be-measured beam quantity is configured for the terminal device, the maximum to-be-measured beam quantity may be configured to a small value.

For example, if the flight status includes the flight path, the network device may infer a subsequent flight path of the terminal device based on the known flight path, and configure different maximum to-be-measured beam quantities for different points on the subsequent flight path. For example, if there are a large quantity of network devices (for example, base stations) near some points, a larger maximum to-be-measured beam quantity may be configured, or if there are a small quantity of network devices (for example, base stations) near some points, a smaller maximum to-be-measured beam quantity may be configured.

Optionally, on the network device, the flight status may also be used as a basis for whether a maximum to-be-measured beam quantity is to be configured. Optionally, on the terminal device, the flight status may also be used as a basis for whether use of a maximum to-be-measured beam quantity is to be triggered.

It can be understood that the maximum to-be-measured beam quantity may be alternatively configured to 0 in some cases.

Manner 2: The network device configures the maximum to-be-measured beam quantity in the measurement configuration, and additionally sends indication information and flight reference information to the terminal device. The indication information is used to indicate to use the maximum to-be-measured beam quantity when a flight status exceeds a range specified in the flight reference information. In other words, the network device configures one or more maximum to-be-measured beam quantities for the terminal device, and the terminal device determines a specific maximum to-be-measured beam quantity to be used. In a possible manner, the terminal device determines, based on the reference information sent by the network device, the specific maximum to-be-measured beam quantity to be used. It is also possible that, after the terminal device makes a decision based on a related parameter before using a maximum to-be-measured beam quantity, a maximum to-be-measured beam quantity finally selected for use is different from the maximum to-be-measured beam quantity carried in the measurement configuration. Therefore, after receiving the measurement configuration, the indication information, and the flight reference information, the terminal device determines whether a flight status is within the range specified in the flight reference information. If the flight status is within the range specified in the flight reference information, the terminal device uses the maximum to-be-measured beam quantity, for example, performs step S704 in subsequent measurement. If the flight status is not within the range specified in the flight reference information, the terminal device does not perform step S704 in subsequent measurement. In this manner, after the indication information and the flight reference information are obtained from the network device, a corresponding maximum to-be-measured beam quantity can be selected for use based on the indication information and the flight reference information. According to this manner, a cellular network can meet requirements of more scenarios, improving flexibility of communication.

In this manner, the network device may generate a plurality of maximum to-be-measured beam quantities, and subsequently, the terminal selects a corresponding maximum to-be-measured beam quantity based on a requirement, or a status of the terminal device such as a location or a speed. For example, the network device generates maximum to-be-measured beam quantities corresponding to a plurality of different points in advance, with the maximum to-be-measured beam quantities for the different points being different. Subsequently, the terminal detects its own flight path, and when reaching one of the points, selects the maximum to-be-measured beam quantity corresponding to the point, for use in subsequent step S704.

In an optional solution, the maximum to-be-measured beam quantity may alternatively not be determined based on the flight status, but may be determined based on other information, for example, a related parameter on a network device side or another parameter on a terminal device side.

Step S702: The network device sends the measurement configuration to the terminal device.

Specifically, the measurement configuration may be sent to the terminal device in a manner of broadcasting or unicasting or in another manner. A specific sending manner is not limited herein.

Step S703: The terminal device receives the measurement configuration from the network device.

The terminal device obtains, based on the measurement configuration received from the network device, a related configuration required for performing cell measurement, and starts measurement.

For use of a maximum to-be-measured beam quantity, the following lists examples of several possible cases.

Case 1: If the network device configures a maximum to-be-measured beam quantity in the manner 1, because the maximum to-be-measured beam quantity is a maximum to-be-measured beam quantity that is appropriate for a current flight status of the terminal device and that is determined by the network device, the terminal device may directly use the maximum to-be-measured beam quantity when performing a subsequent operation, for example, performing step S704.

Optionally, it is also possible that a maximum to-be-measured beam quantity is not determined by the network device based on a flight status of the terminal device. In this case, after obtaining a maximum to-be-measured beam quantity through parsing, the terminal device may also directly use the maximum to-be-measured beam quantity when performing a subsequent operation.

Optionally, it is also possible that, after obtaining a maximum to-be-measured beam quantity through parsing, the terminal device performs a corresponding determining operation based on another parameter obtained by the terminal device, to determine whether the maximum to-be-measured beam quantity obtained by parsing the measurement configuration is finally used.

It should be noted that, whether the terminal needs to perform the determining operation, how the terminal uses the maximum to-be-measured beam quantity, and when the terminal uses the maximum to-be-measured beam quantity may all be indicated by the network device by delivering a configuration, or may be predefined in a protocol. This is not limited herein.

Case 2: If the network device configures a maximum to-be-measured beam quantity in the manner 2, because the network device does not analyze or determine a flight status of the terminal device when configuring the maximum to-be-measured beam quantity, the terminal device needs to determine whether it is appropriate for the terminal device to use the maximum to-be-measured beam quantity. For example, the terminal device determines whether its flight status exceeds the range specified in the flight reference information. If the flight status of the terminal device exceeds the range specified in the flight reference information, the terminal device uses the maximum to-be-measured beam quantity when, for example, performing subsequent step S704.

Optionally, a specific implementation and a specific policy may be configured by the network device. For example, the indication information and the flight reference information are received from the network device. The indication information is used to indicate to use the maximum to-be-measured beam quantity when a flight status exceeds the range specified in the flight reference information. To be specific, the terminal device performs the foregoing determining based on an indication from the network device.

Optionally, a specific implementation and a specific policy may be defined in a protocol. To be specific, the following is defined in the protocol: The maximum to-be-measured beam quantity is used when a flight status exceeds the range specified in the flight reference information. Therefore, the terminal device performs the foregoing determining based on a stipulation in the protocol.

Step S704: The terminal device selects N beams from detected beams based on the maximum to-be-measured beam quantity.

The detected beams mentioned herein may also be described as available beams. The detected beams may be beams detected before layer 1 filtering (for example, in a phase A in FIG. 4), or beams detected after layer 1 filtering (for example, in a phase A1 in FIG. 4), or beams detected after layer 3 filtering (for example, in a phase E in FIG. 4), or beams detected during beam selection/consolidation (for example, during a phase "beam consolidation/selection" in FIG. 4).

N herein is less than the maximum to-be-measured beam quantity.

Therefore, that the terminal device selects N beams from detected beams based on the maximum to-be-measured beam quantity includes at least:
selecting, based on the maximum to-be-measured beam quantity, N beams from the beams that are detected before layer 1 filtering (for example, in the phase A in FIG. 4);
   or,
selecting, based on the maximum to-be-measured beam quantity, N beams from the beams that are detected before layer 1 filtering (for example, in the phase A1 in FIG. 4);
   or,
selecting, based on the maximum to-be-measured beam quantity, N beams from the beams that are detected before layer 1 filtering (for example, in the phase E in FIG. 4);
   or,
selecting, based on the maximum to-be-measured beam quantity, N beams from the beams that are detected (for example, beams greater than a beam consolidation threshold) before layer 1 filtering (for example, during the phase "beam consolidation/selection" in FIG. 4).

In an optional solution, the selecting N beams from detected beams mentioned above may be: selecting N beams from beams that are detected by a first type of antenna and/or a second type of antenna. Therefore, there are the following possible solutions for selection of N beams.

For example, the terminal device is configured (or equipped) with the first type of antenna and the second type of antenna. The terminal device determines beams detected by the first type of antenna and beams measured by the second type of antenna, and then selects N beams from all the beams detected by the two types of antennas.

For another example, the terminal device may alternatively select N beams only from the beams detected by one of the two types of antennas.

Optionally, the first type of antenna may be a directional antenna, and the second type of antenna may be an omnidirectional antenna.

In this embodiment of this application, if the terminal device detects beams of a plurality of cells, the terminal device selects N beams in at least two implementations below:
at a per-terminal device granularity, where N beams are selected from all the beams of the plurality of cells; and
at a per-cell granularity, where for each of the plurality of cells, N beams are selected from the beams of the cell.

It should be noted that a specific granularity at which determining is performed is not limited in this embodiment of this application. For example, the terminal device may determine, based on an indication from the network device, to perform determining at the per-cell granularity or at the per-terminal device granularity, or the terminal device may select, based on an actual requirement, to perform determining at the per-cell granularity or at the per-terminal device granularity, or it may be agreed on in advance that determining is performed at the per-cell granularity or at the per-terminal device granularity.

Step S705: The terminal device obtains a cell measurement result for one or more cells based on signal quality of the N beams.

The obtaining herein may also be referred to as generating, deducing, deriving, or the like.

If the terminal device selects the N beams at the per-terminal device granularity, the terminal device first determines specific cells that are of the plurality of cells and to which the N beams respectively belong, and then obtains a cell measurement result for a corresponding cell based on signal quality of the beams that belong to the cell. In this manner, a cell measurement result can be obtained for each cell related to the N beams.

If the terminal device selects the N beams at the per-cell granularity, the terminal device selects the N beams from detected beams of a second cell, and obtains a cell measurement result for the second cell based on signal quality of the N beams of the second cell. Operations performed for each of the plurality of cells are the same as the operations performed for the second cell. The terminal device performs operations in this manner until the terminal device obtains a cell measurement result for each cell.

In a possible implementation, the cell measurement result mentioned herein includes cell signal quality, for example, a result in a phase B shown in FIG. 4 or a result in a phase C shown in FIG. 4.

In this embodiment of this application, the cell measurement result is described above, and therefore, details are not described herein again.

In this embodiment of this application, optionally, after a cell measurement result is obtained for a corresponding cell, steps S706 and S707 may be further performed, to complete reporting of a measurement report.

Step S706: The terminal device determines that a quantity of first cells meeting criteria is greater than or equal to a trigger cell quantity.

For implementation of this step, refer to related explanations of step S506.

Step S707: The terminal device sends a measurement report corresponding to the first cells to the network device.

For implementation of this step, refer to related explanations of step S507.

Step S708: The network device receives the measurement report from the terminal device.

For implementation of this step, refer to related explanations of step S508.

According to the foregoing method, the network device adds the maximum to-be-measured beam quantity to the measurement configuration. Correspondingly, when obtaining a cell measurement result for a cell, the terminal device performs measurement only based on beams a quantity of which is less than or equal to the maximum to-be-measured beam quantity. In this way, measurement performed by the terminal device on beams is limited, reducing measurement overheads.

In this embodiment of this application, the cell measurement result may include signal quality, for example, including at least one of a received signal code power (received signal code power, RSCP), a reference signal received power (reference signal received power, RSRP), reference signal received quality (reference signal received quality, RSRQ), a signal to noise ratio (Signal to Noise Ratio, SNR), a signal to interference plus noise ratio (signal to interference plus noise ratio, SINR), reference signal strength indication (reference signal strength indication, RSSI), or other signal quality.

The foregoing describes the methods in embodiments of this application in detail. The following provides apparatuses in embodiments of this application.

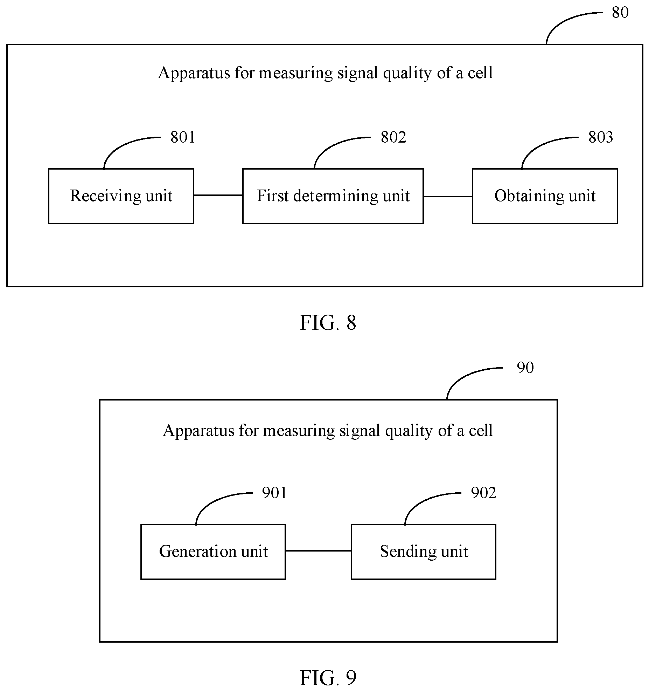

FIG. 8 is a diagram of a structure of an apparatus 80 for measuring signal quality of a cell according to an embodiment of this application. The apparatus 80 may be the terminal device in the method embodiment shown in FIG. 5 or a component in the terminal device. The apparatus 80 may include a receiving unit 801, a first determining unit 802, and an obtaining unit 803. Each unit is described in detail below.

The receiving unit 801 is configured to receive a measurement configuration from a network device. The measurement configuration includes a trigger beam quantity. The trigger beam quantity is a beam quantity threshold that triggers generation of a cell measurement result.

The first determining unit 802 is configured to determine that a quantity of detected beams is greater than or equal to the trigger beam quantity. The detected beams belong to one or more cells.

The obtaining unit 803 is configured to obtain a cell measurement result for the one or more cells based on signal quality of the detected beams.

In the foregoing method, the network device adds the trigger beam quantity to the measurement configuration. Correspondingly, when a quantity of detected beams is greater than or equal to the trigger beam quantity, the apparatus 80 generates a measurement result for a corresponding cell. In this way, a frequency of reporting a measurement report for a cell can be reduced, saving communication resources.

In a possible implementation, the measurement configuration further includes a trigger cell quantity, the trigger cell quantity is a cell quantity threshold that triggers reporting of a measurement report, and the apparatus further includes:
a determining unit, configured to determine that a quantity of first cells meeting criteria is greater than or equal to the trigger cell quantity; and
a sending unit, configured to send a measurement report corresponding to the first cells to the network device.

In this implementation, the measurement configuration further carries the trigger cell quantity. When a quantity of cells meeting the reporting criteria is greater than or equal to the trigger cell quantity, a measurement report is reported. Due to constraints of both the trigger beam quantity and the trigger cell quantity, the frequency of reporting a measurement report for a cell is further reduced, saving communication resources.

In another possible implementation,
in the aspect of determining that a quantity of detected beams is greater than or equal to the trigger beam quantity, a second determining unit is specifically configured to:
determine that a quantity of detected second cells is greater than or equal to the trigger beam quantity; and
in the aspect of obtaining a cell measurement result for the one or more cells based on signal quality of the detected beams, the obtaining unit is specifically configured to:
   obtain a cell measurement result for the second cell based on signal quality of the beams of the second cell.

In this implementation, a quantity of detected beams of each cell is compared with the trigger beam quantity at a per-cell granularity. Therefore, a signal status of a cell can be assessed from a perspective of a cell, providing a basis for determining whether subsequent obtaining of a cell measurement result is performed.

In another possible implementation,
in the aspect of determining that a quantity of detected beams is greater than or equal to the trigger beam quantity, the second determining unit is specifically configured to:
determine that a sum of quantities of detected beams of cells is greater than or equal to the trigger beam quantity; and
in the aspect of obtaining a cell measurement result for the one or more cells based on signal quality of the detected beams, the obtaining unit is specifically configured to:
   obtain a cell measurement result for each cell based on signal quality of the detected beams of the cell.

In this implementation, a total quantity of detected beams of one or more cells that correspond to a terminal device is compared with the trigger beam quantity at a per-terminal device granularity. Therefore, a signal status of a cell can be assessed from a perspective of a terminal device, providing a basis for determining whether subsequent obtaining of a cell measurement result is performed.

In another possible implementation, in the aspect of determining that a quantity of detected beams is greater than or equal to the trigger beam quantity, the second determining unit is specifically configured to:
determine that a quantity of beams detected before layer 1 filtering is greater than or equal to the trigger beam quantity; or
determine that a quantity of beams detected after layer 1 filtering is greater than or equal to the trigger beam quantity; or
determine that a quantity of beams detected after layer 3 beam filtering is greater than or equal to the trigger beam quantity; or
determine that a quantity of beams detected during beam selection/consolidation is greater than or equal to the trigger beam quantity.

In this implementation, the detected beams may be detected before layer 1 filtering, after layer 1 filtering, after layer 3 beam filtering, or during beam selection/consolidation. When it is determined whether the quantity of the detected beams is greater than or equal to the trigger beam quantity, any one or more of the quantities of the beams detected in the several phases may be compared with the trigger beam quantity. Comparison results can all reflect a signal status of a cell to some extent. It can be understood that trigger beam quantities configured or preset for different phases may be different.

In another possible implementation, the apparatus 80 further includes:
a sending unit, configured to send flight status information to the network device, where a flight status includes one or more of a flight altitude, a flight speed, a flight location, or a flight path.

In this implementation, when the flight status information is sent to the network device, the network device can configure the trigger beam quantity based on the flight status information. According to this implementation, a cellular network can meet requirements of more scenarios, improving flexibility of communication.

In another possible implementation, the apparatus 80 further includes:
a receiving unit, configured to receive indication information and flight reference information from the network device, where the indication information is used to indicate to use the trigger beam quantity when a flight status exceeds a range specified in the flight reference information, and the flight status includes one or more of a flight altitude, a flight speed, a flight location, or a flight path; and
a third determining unit, configured to determine that the flight status is within the range specified in the flight reference information.

In this implementation, after the indication information and the flight reference information are obtained from the network device, a corresponding trigger beam quantity can be selected for use based on the indication information and the flight reference information. According to this implementation, a cellular network can meet requirements of more scenarios, improving flexibility of communication.

In another possible implementation, in the aspect of determining that a quantity of detected beams is greater than or equal to the trigger beam quantity, the second determining unit is specifically configured to:
determine that a quantity of beams measured by a first type of antenna and/or a quantity of beams measured by a second type of antenna are/is greater than or equal to the trigger beam quantity. For example, a type of antenna is selected from the first type of antenna and the second type of antenna, and then it is determined whether the quantity of the beams measured by the selected type of antenna is greater than or equal to the cumulative signal quality sum threshold. For another example, the quantity of the beams measured by the first type of antenna and the quantity of the beams measured by the second type of antenna are added up, and then it is determined whether a result of the addition is greater than or equal to the cumulative signal quality sum threshold. For another example, each of the quantity of the beams measured by the first type of antenna and the quantity of the beams measured by the second type of antenna is compared with the cumulative signal quality sum threshold. When any one of comparison results is greater than or equal to the cumulative signal quality sum threshold, it can be determined that the quantity of the beams measured is greater than or equal to the cumulative signal quality sum threshold.

In another possible implementation, the first type of antenna includes a directional antenna, and the second type of antenna includes an omnidirectional antenna.

In another possible implementation, the measurement configuration further includes a cumulative signal quality sum threshold, and the cumulative signal quality sum threshold is a cumulative signal quality sum threshold for beams that triggers generation of a cell measurement result; and
the apparatus further includes:
a fourth determining unit, configured to determine that a cumulative signal quality sum of the detected beams is greater than or equal to the cumulative signal quality sum threshold.

In this implementation, when it is determined that the quantity of the detected beams is greater than or equal to the trigger beam quantity and that the cumulative signal quality sum of the detected beams is greater than or equal to the cumulative signal quality sum threshold, the operation of obtaining a cell measurement result for the one or more cells based on signal quality of the detected beams is performed. According to this implementation, overheads that a terminal device uses for measurement can be further reduced, and the frequency of reporting a measurement report can be decreased, further saving communication resources.

It should be noted that for implementation of each unit, reference may also be correspondingly made to the corresponding descriptions of the method embodiment shown in FIG. 5.

FIG. 9 is a diagram of a structure of an apparatus 90 for measuring signal quality of a cell according to an embodiment of this application. The apparatus 90 may be the network device in the method embodiment shown in FIG. 5 or a component in the network device. The apparatus 90 may include a generation unit 901 and a sending unit 902. Each unit is described in detail below.

The generation unit 901 is configured to generate a measurement configuration. The measurement configuration includes a trigger beam quantity. The trigger beam quantity is a beam quantity threshold that triggers generation of a cell measurement result.

The sending unit 902 is configured to send the measurement configuration to a terminal device.

In the foregoing method, the apparatus 90 adds the trigger beam quantity to the measurement configuration. Correspondingly, when a quantity of detected beams is greater than or equal to the trigger beam quantity, the terminal device generates a measurement result for a corresponding cell. In this way, a frequency of reporting a measurement report for a cell can be reduced, saving communication resources.

In a possible implementation, the measurement configuration further includes a trigger cell quantity, the trigger cell quantity is a cell quantity threshold that triggers reporting of a measurement report, and the apparatus further includes:
a receiving unit, configured to receive a measurement report from the terminal device.

In this implementation, the measurement configuration further carries the trigger cell quantity. When a quantity of cells meeting reporting criteria is greater than or equal to the trigger cell quantity, a measurement report is reported. Due to constraints of both the trigger beam quantity and the trigger cell quantity, the frequency of reporting a measurement report for a cell is further reduced, saving communication resources.

In another possible implementation, the apparatus 90 further includes:
an obtaining unit, configured to obtain flight status information of the terminal device;
a first determining unit, configured to determine, based on the flight status information, that a flight status of the terminal device exceeds a range specified in flight reference information, where the flight status includes one or more of a flight altitude, a flight speed, a flight location, or a flight path; and
a configuration unit, adapted to configure the trigger beam quantity.

In this implementation, after the flight status information is received from the terminal device, the trigger beam quantity can be configured based on the flight status information. According to this implementation, a cellular network can meet requirements of more scenarios, improving flexibility of communication.

In another possible implementation, in the aspect of obtaining a flight status of the terminal device, the obtaining unit is specifically configured to:
receive the flight status information from the terminal device.

In another possible implementation, the sending unit is further configured to send indication information and flight reference information to the terminal device. The indication information is used to indicate to use the trigger beam quantity when a flight status exceeds a range specified in the flight reference information. The flight status includes one or more of a flight altitude, a flight speed, a flight location, or a flight path.

In this implementation, after the indication information and the flight reference information are sent to the terminal device, the terminal device can select a corresponding trigger beam quantity for use based on the indication information and the flight reference information. According to this implementation, a cellular network can meet requirements of more scenarios, improving flexibility of communication.

In another possible implementation, the measurement configuration further includes a cumulative signal quality sum threshold, and the cumulative signal quality sum threshold is a cumulative signal quality sum threshold for beams that triggers generation of a cell measurement result.

In this implementation, the measurement configuration includes the trigger beam quantity and the cumulative signal quality sum threshold. In this way, when determining that a quantity of detected beams is greater than or equal to the trigger beam quantity and that a cumulative signal quality sum of the detected beams is greater than or equal to the cumulative signal quality sum threshold, the terminal device performs the following operation: obtaining a cell measurement result for one or more cells based on signal quality of the detected beams. According to this implementation, overheads that a terminal device uses for measurement can be further reduced, and the frequency of reporting a measurement report can be decreased, further saving communication resources.

It should be noted that for implementation of each unit, reference may also be correspondingly made to the corresponding descriptions of the method embodiment shown in FIG. 5.

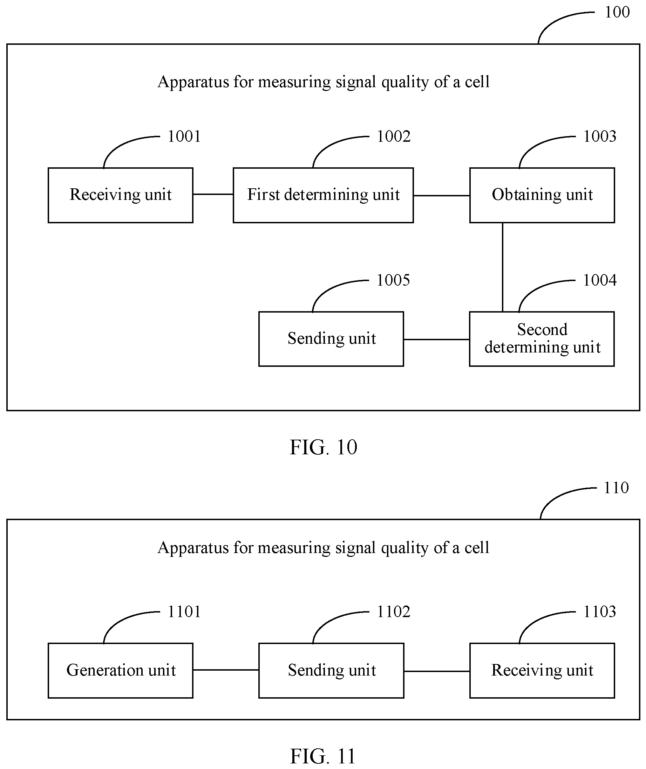

FIG. 10 is a diagram of a structure of an apparatus 100 for measuring signal quality of a cell according to an embodiment of this application. The apparatus 100 may be the terminal device in the method embodiment shown in FIG. 6 or a component in the terminal device. The apparatus 100 may include a receiving unit 1001, a first determining unit 1002, an obtaining unit 1003, a second determining unit 1004, and a sending unit 1005. Each unit is described in detail below.

The receiving unit 1001 is configured to receive a measurement configuration from a network device. The measurement configuration includes a cumulative signal quality sum threshold and a trigger cell quantity. The cumulative signal quality sum threshold is a cumulative signal quality sum threshold for beams that triggers generation of a cell measurement result. The trigger cell quantity is a cell quantity threshold that triggers reporting of a measurement report.

The first determining unit 1002 is configured to determine that a cumulative signal quality sum of detected beams is greater than or equal to the cumulative signal quality sum threshold. The detected beams belong to one or more cells.

The obtaining unit 1003 is configured to obtain a cell measurement result for the one or more cells based on signal quality of the detected beams.

The second determining unit 1004 is configured to determine that a quantity of first cells meeting criteria is greater than or equal to the trigger cell quantity.

The sending unit 1005 is configured to send a measurement report corresponding to the first cells to the network device.

According to the foregoing method, the network device adds the cumulative signal quality sum threshold and the trigger cell quantity to the measurement configuration. Correspondingly, when a cumulative signal quality sum of detected beams is greater than or equal to the cumulative signal quality sum threshold, the apparatus 100 generates a measurement result for a corresponding cell. In this way, a frequency of reporting a measurement report for a cell can be reduced, saving communication resources. In addition, when a quantity of cells meeting the reporting criteria is greater than or equal to the trigger cell quantity, a measurement report is reported. Due to constraints of both the cumulative cell signal quality and the trigger cell quantity, the frequency of reporting a measurement report for a cell is reduced, saving communication resources.

In a possible implementation,
in the aspect of determining that a cumulative signal quality sum of detected beams is greater than or equal to the cumulative signal quality sum threshold, the first determining unit is specifically configured to:
determine that a cumulative signal quality sum of detected beams of a second cell is greater than or equal to the cumulative signal quality sum threshold; and
in the aspect of obtaining a cell measurement result for the one or more cells based on signal quality of the detected beams, the obtaining unit is specifically configured to:
   obtain a cell measurement result for the second cell based on signal quality of the beams of the second cell.

In this implementation, a cumulative signal quality sum of detected beams of each cell is compared with the cumulative signal quality sum threshold at a per-cell granularity. Therefore, a signal status of a cell can be assessed from a perspective of a cell, providing a basis for determining whether subsequent obtaining of a cell measurement result is performed.

In another possible implementation,
in the aspect of determining that a cumulative signal quality sum of detected beams is greater than or equal to the cumulative signal quality sum threshold, the first determining unit is specifically configured to:
determine that a cumulative signal quality sum of detected beams of cells is greater than or equal to the cumulative signal quality sum threshold; and
in the aspect of obtaining a cell measurement result for the one or more cells based on signal quality of the detected beams, the obtaining unit is specifically configured to:
   obtain a cell measurement result for each cell based on signal quality of the detected beams of the cell.

In this implementation, a cumulative signal quality sum of detected beams of one or more cells that correspond to a terminal device is compared with the cumulative signal quality sum threshold at a per-terminal device granularity. Therefore, a signal status of a cell can be assessed from a perspective of a terminal device, providing a basis for determining whether subsequent obtaining of a cell measurement result is performed.

In another possible implementation,
in the aspect of determining that a cumulative signal quality sum of detected beams is greater than or equal to the cumulative signal quality sum threshold, the first determining unit is specifically configured to:
determine that a cumulative signal quality sum of beams detected before layer 1 filtering is greater than or equal to the cumulative signal quality sum threshold; or
determine that a cumulative signal quality sum of beams detected after layer 1 filtering is greater than or equal to the cumulative signal quality sum threshold; or
determine that a cumulative signal quality sum of beams detected after layer 3 beam filtering is greater than or equal to the cumulative signal quality sum threshold; or
determine that a cumulative signal quality sum of beams detected during beam selection/consolidation is greater than or equal to the cumulative signal quality sum threshold.

In this implementation, the detected beams may be detected before layer 1 filtering, after layer 1 filtering, after layer 3 beam filtering, or during beam selection/consolidation. When it is determined whether the cumulative signal quality sum of the detected beams is greater than or equal to the cumulative signal quality sum threshold, any one or more of the cumulative signal quality sums of the beams detected in the several phases may be compared with the cumulative signal quality sum threshold. Comparison results can all reflect a signal status of a cell to some extent. It can be understood that cumulative signal quality sum thresholds configured or preset for different phases may be different.

In another possible implementation, in the aspect of obtaining a cell measurement result for the one or more cells based on signal quality of the detected beams, the second obtaining unit is specifically configured to:
obtain a first cumulative signal quality sum of beams detected over a first time period;
obtain M second cumulative signal quality sums that correspond to beams detected over M time periods preceding the first time period, where M≥1; and
obtain a cell or beam measurement result for the one or more cells based on statuses of the first cumulative signal quality sum and the M second cumulative signal quality sums.

In this implementation, a layer 3 filtering process is constrained based on obtained cumulative signal quality sums corresponding to different time periods, optimizing a layer 3 filtering result, and avoiding a filtering result being significantly affected by some extreme cases.

In another possible implementation, in the aspect of obtaining a cell or beam measurement result for the one or more cells based on statuses of the first cumulative signal quality sum and the M second cumulative signal quality sums, the second obtaining unit is specifically configured to:
if the first cumulative signal quality sum is greater than the cumulative signal quality sum threshold, and the M second cumulative signal quality sums include a second cumulative signal quality sum that is greater than the cumulative signal quality sum threshold, generate a cell or beam measurement result for the one or more cells based on signal quality of the beams detected over the first time period, and based on signal quality of beams detected over a time period that corresponds to the second cumulative signal quality sum greater than the cumulative signal quality sum threshold.

In this implementation, signal quality corresponding to a time period that corresponds to a cumulative signal quality sum less than the cumulative signal quality sum threshold is ignored in the layer 3 filtering process.

In another possible implementation, in the aspect of obtaining a cell or beam measurement result for the one or more cells based on statuses of the first cumulative signal quality sum and the M second cumulative signal quality sums, the second obtaining unit is specifically configured to:
if the first cumulative signal quality sum is greater than the cumulative signal quality sum threshold, and a second cumulative signal quality sum corresponding to a previous time period of the first time period is less than the cumulative signal quality sum threshold, generate a cell or beam measurement result for the one or more cells based on signal quality of the beams detected over the first time period.

In this implementation, the following is ignored in the layer 3 filtering process: signal quality corresponding to the time period that corresponds to the cumulative signal quality sum less than the cumulative signal quality sum threshold, and signal quality corresponding to a time period that precedes the time period.

In another possible implementation, in the aspect of obtaining a cell measurement result for the one or more cells based on signal quality of the detected beams, the second obtaining unit is specifically configured to:
obtain a first cumulative signal quality sum of beams detected over a first time period; and
if the first cumulative signal quality sum is greater than the cumulative signal quality sum threshold, generate a cell or beam measurement result for the one or more cells based on signal quality of the beams detected over the first time period, and based on signal quality of beams detected within a preset time range that precedes the first time period.

In another possible implementation, the sending unit is further configured to:
send flight status information to the network device, where a flight status includes one or more of a flight altitude, a flight speed, a flight location, or a flight path.

In this implementation, when the flight status information is sent to the network device, the network device can configure the cumulative signal quality sum threshold based on the flight status information. According to this implementation, a cellular network can meet requirements of more scenarios, improving flexibility of communication.

In another possible implementation, the apparatus 100 further includes:
a receiving unit, configured to receive indication information and flight reference information from the network device, where the indication information is used to indicate to use the cumulative signal quality sum threshold when a flight status exceeds a range specified in the flight reference information, and the flight status includes one or more of a flight altitude, a flight speed, a flight location, or a flight path; and
a third determining unit, configured to determine that the flight status falls within the range specified in the flight reference information.

In this implementation, after the indication information and the flight reference information are obtained from the network device, a corresponding cumulative signal quality sum threshold can be selected for use based on the indication information and the flight reference information. According to this implementation, a cellular network can meet requirements of more scenarios, improving flexibility of communication.

In another possible implementation, in the aspect of determining that a cumulative signal quality sum of detected beams is greater than or equal to the cumulative signal quality sum threshold, the second determining unit is specifically configured to:
determine that a cumulative signal quality sum of beams measured by a first type of antenna and/or a cumulative signal quality sum of beams measured by a second type of antenna are/is greater than or equal to the cumulative signal quality sum threshold. For example, a type of antenna is selected from the first type of antenna and the second type of antenna, and then it is determined whether the cumulative signal quality sum of the beams measured by the selected type of antenna is greater than or equal to the cumulative signal quality sum threshold. For another example, the cumulative signal quality sum of the beams measured by the first type of antenna and the cumulative signal quality sum of the beams measured by the second type of antenna are added up, and then it is determined whether a result of the addition is greater than or equal to the cumulative signal quality sum threshold. For another example, each of the cumulative signal quality sum of the beams measured by the first type of antenna and the cumulative signal quality sum of the beams measured by the second type of antenna is compared with the cumulative signal quality sum threshold. When any one of comparison results is greater than or equal to the cumulative signal quality sum threshold, it can be determined that the cumulative signal quality sum of the beams measured is greater than or equal to the cumulative signal quality sum threshold.

In another possible implementation, the first type of antenna includes a directional antenna, and the second type of antenna includes an omnidirectional antenna.

It should be noted that for implementation of each unit, reference may also be correspondingly made to the corresponding descriptions of the method embodiment shown in FIG. 6.

FIG. 11 is a diagram of a structure of an apparatus 110 for measuring signal quality of a cell according to an embodiment of this application. The apparatus 110 may be the network device in the method embodiment shown in FIG. 6 or a component in the network device. The apparatus 110 may include a generation unit 1101, a sending unit 1102, and a receiving unit 1103. Each unit is described in detail below.

The generation unit 1101 is configured to generate a measurement configuration. The measurement configuration includes a cumulative signal quality sum threshold and a trigger cell quantity. The cumulative signal quality sum threshold is a cumulative signal quality sum threshold for beams that triggers generation of a cell measurement result. The trigger cell quantity is a cell quantity threshold that triggers reporting of a measurement report.

The sending unit 1102 is configured to send the measurement configuration to a terminal device.

The receiving unit 1103 is configured to receive a measurement report from the terminal device.

According to the foregoing method, the apparatus 110 adds the cumulative signal quality sum threshold and the trigger cell quantity to the measurement configuration. Correspondingly, when a cumulative signal quality sum of detected beams is greater than or equal to the cumulative signal quality sum threshold, the terminal device generates a measurement result for a corresponding cell. In this way, a frequency of reporting a measurement report for a cell can be reduced, saving communication resources. In addition, when a quantity of cells meeting reporting criteria is greater than or equal to the trigger cell quantity, a measurement report is reported. Due to constraints of both the cumulative cell signal quality and the trigger cell quantity, the frequency of reporting a measurement report for a cell is reduced, saving communication resources.

In a possible implementation, the apparatus 110 further includes:
a first obtaining unit, configured to obtain flight status information of the terminal device;
a first determining unit, configured to determine, based on the flight status information, that a flight status of the terminal device exceeds a range specified in flight reference information, where the flight status includes one or more of a flight altitude, a flight speed, a flight location, or a flight path; and
a configuration unit, adapted to configure the cumulative signal quality sum threshold.

In this implementation, after the flight status information is received from the terminal device, the cumulative signal quality sum threshold can be configured based on the flight status information. According to this implementation, a cellular network can meet requirements of more scenarios, improving flexibility of communication.

In another possible implementation, in the aspect of obtaining flight status information of the terminal device, the first obtaining unit is specifically configured to:
receive the flight status information from the terminal device.

In another possible implementation, the sending unit is further configured to:
send indication information and flight reference information to the terminal device, where the indication information is used to indicate to use the cumulative signal quality sum threshold when a flight status exceeds a range specified in the flight range information, and the flight status includes one or more of a flight altitude, a flight speed, a flight location, or a flight path.

In this implementation, after the indication information and the flight reference information are sent to the terminal device, the terminal device can select a corresponding cumulative signal quality sum threshold for use based on the indication information and the flight reference information. According to this implementation, a cellular network can meet requirements of more scenarios, improving flexibility of communication.

It should be noted that for implementation of each unit, reference may also be correspondingly made to the corresponding descriptions of the method embodiment shown in FIG. 6.

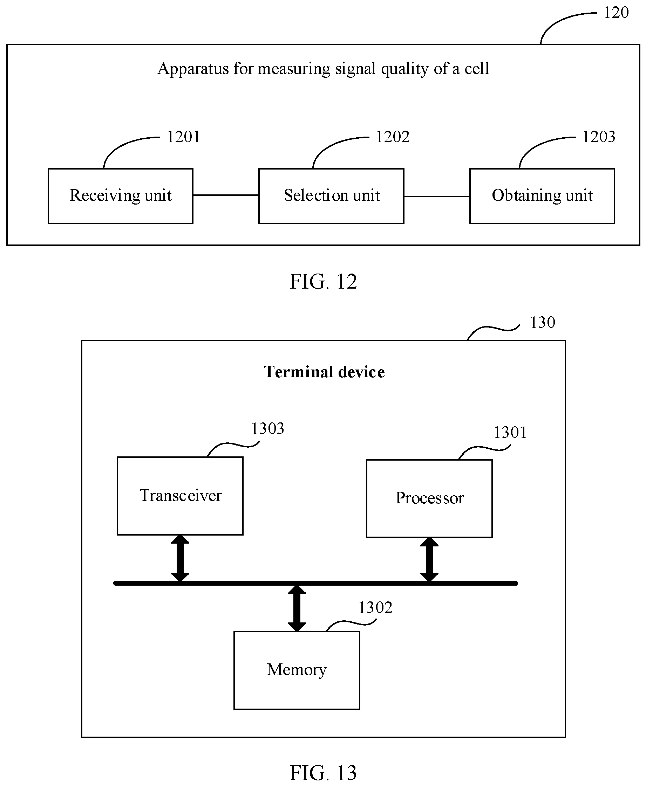

FIG. 12 is a diagram of a structure of an apparatus 120 for measuring signal quality of a cell according to an embodiment of this application. The apparatus 120 may be the terminal device in the method embodiment shown in FIG. 7 or a component in the terminal device. The apparatus 120 may include a receiving unit 1201, a selection unit 1202, and an obtaining unit 1203. Each unit is described in detail below.

The receiving unit 1201 is configured to receive a measurement configuration from a network device. The measurement configuration includes a maximum to-be-measured beam quantity. The maximum to-be-measured beam quantity is an upper quantity limit of beams that need to be measured for triggering generation of a cell measurement result.

The selection unit 1202 is configured to select N beams from detected beams based on the maximum to-be-measured beam quantity. N is less than the maximum to-be-measured beam quantity. The detected beams belong to one or more cells.

The obtaining unit 1203 is configured to obtain a cell measurement result for the one or more cells based on signal quality of the N beams.

According to the foregoing method, the network device adds the maximum to-be-measured beam quantity to the measurement configuration. Correspondingly, when obtaining a cell measurement result for a cell, the apparatus 120 performs measurement only based on beams a quantity of which is less than or equal to the maximum to-be-measured beam quantity, reducing measurement overheads.

In a possible implementation, the measurement configuration further includes a trigger cell quantity, the trigger cell quantity is a cell quantity threshold that triggers reporting of a measurement report, and the apparatus further includes:
a first determining unit, configured to determine that a quantity of first cells meeting criteria is greater than or equal to the trigger cell quantity; and
a sending unit, configured to send a measurement report corresponding to the first cells to the network device.

In this implementation, the measurement configuration further carries the trigger cell quantity. When a quantity of cells meeting the reporting criteria is greater than or equal to the trigger cell quantity, a measurement report is reported. Due to constraints of both the trigger beam quantity and the trigger cell quantity, a frequency of reporting a measurement report for a cell is further reduced, saving communication resources.

In another possible implementation, in the aspect of selecting N beams from detected beams based on the maximum to-be-measured beam quantity, the selection unit is specifically configured to:
select, based on the maximum to-be-measured beam quantity, N beams from beams that are obtained before layer 1 filtering; or
select, based on the maximum to-be-measured beam quantity, N beams from beams that are obtained after layer 1 filtering; or
select, based on the maximum to-be-measured beam quantity, N beams from beams that are obtained after layer 3 filtering; or
select, based on the maximum to-be-measured beam quantity, N beams from beams that are obtained during beam selection/consolidation.

In this implementation, the detected beams may be detected before layer 1 filtering, after layer 1 filtering, after layer 3 beam filtering, or during beam selection/consolidation. In a process of determining to select N beams, the N beams may be selected from any one or more of the beams obtained in the several phases. Maximum to-be-measured beam quantities designed for different phases may be different.

In another possible implementation, the apparatus further includes:
a sending unit, configured to send flight status information to the network device, where a flight status includes one or more of a flight altitude, a flight speed, a flight location, or a flight path.

In this implementation, when the flight status information is sent to the network device, the network device can configure the maximum to-be-measured beam quantity based on the flight status information. According to this implementation, a cellular network can meet requirements of more scenarios, improving flexibility of communication.

In another possible implementation, the receiving unit is further configured to:
receive indication information and flight reference information from the network device, where the indication information is used to indicate to use the maximum to-be-measured beam quantity when a flight status exceeds a range specified in the flight reference information, and the flight status includes one or more of a flight altitude, a flight speed, a flight location, or a flight path; and
the apparatus further includes a second determining unit, configured to:
   determine that the flight status falls within the range specified in the flight reference information.

In this implementation, after the indication information and the flight reference information are obtained from the network device, a corresponding maximum to-be-measured beam quantity can be selected for use based on the indication information and the flight reference information. According to this implementation, a cellular network can meet requirements of more scenarios, improving flexibility of communication.

In another possible implementation, in the aspect of selecting N beams from detected beams based on the maximum to-be-measured beam quantity, the selection unit is specifically configured to:
select, based on the maximum to-be-measured beam quantity, N beams from beams that are obtained by a first type of antenna and/or a second type of antenna. For example, a type of antenna is selected from the first type of antenna and the second type of antenna, and then N beams are selected from the beams that are measured by the selected type of antenna. For another example, the beams measured by the first type of antenna and the beams measured by the second type of antenna are all used as objects to be selected, and then N beams are selected from the objects to be selected.

In another possible implementation, the first type of antenna includes a directional antenna, and the second type of antenna includes an omnidirectional antenna.

It should be noted that for implementation of each unit, reference may also be correspondingly made to the corresponding descriptions of the method embodiment shown in FIG. 7.

An embodiment of this application further provides an apparatus for measuring signal quality of a cell. The apparatus may be the network device in the method embodiment shown in FIG. 7 or a component in the network device. A structure of the apparatus may be shown in FIG. 9. For example, the apparatus 90 may include a generation unit 901 and a sending unit 902. When the apparatus 90 shown in FIG. 9 corresponds to the method embodiment shown in FIG. 7, each unit is described in detail below.

The generation unit 901 is configured to generate a measurement configuration. The measurement configuration includes a maximum to-be-measured beam quantity. The maximum to-be-measured beam quantity is an upper quantity limit of beams that need to be measured for triggering generation of a cell measurement result.

The sending unit 902 is configured to send the measurement configuration to a terminal device.

According to the foregoing method, the apparatus 90 adds the maximum to-be-measured beam quantity to the measurement configuration. Correspondingly, when obtaining a cell measurement result for a cell, the terminal device performs measurement only based on beams a quantity of which is less than the maximum to-be-measured beam quantity. **In** this way, measurement performed by the terminal device on beams is limited, reducing measurement overheads.

In a possible implementation, the measurement configuration further includes a trigger cell quantity, the trigger cell quantity is a cell quantity threshold that triggers reporting of a measurement report, and the apparatus further includes:
a sending unit, configured to receive a measurement report from the terminal device.

In this implementation, the measurement configuration further carries the trigger cell quantity. When a quantity of cells meeting reporting criteria is greater than or equal to the trigger cell quantity, a measurement report is reported. Due to constraints of both the trigger beam quantity and the trigger cell quantity, a frequency of reporting a measurement report for a cell is further reduced, saving communication resources.

In another possible implementation, the apparatus further includes:
an obtaining unit, configured to obtain flight status information of the terminal device;
a determining unit, configured to determine, based on the flight status information, that a flight status of the terminal device exceeds a range specified in flight reference information, where the flight status includes one or more of a flight altitude, a flight speed, a flight location, or a flight path; and
a configuration unit, adated to configure the maximum to-be-measured beam quantity.

In this implementation, after the flight status information is received from the terminal device, the maximum to-be-measured beam quantity can be configured based on the flight status information. According to this implementation, a cellular network can meet requirements of more scenarios, improving flexibility of communication.

In another possible implementation, in the aspect of obtaining a flight status of the terminal device, the obtaining unit is specifically configured to:
receive the flight status information from the terminal device.

In another possible implementation, the sending unit is further configured to:
send indication information and flight reference information to the terminal device, where the indication information is used to indicate to use the maximum to-be-measured beam quantity when a flight status exceeds a range specified in the flight reference information, and the flight status includes one or more of a flight altitude, a flight speed, a flight location, or a flight path.

In this implementation, after the indication information and the flight reference information are sent to the terminal device, the terminal device can select a corresponding maximum to-be-measured beam quantity for use based on the indication information and the flight reference information. According to this implementation, a cellular network can meet requirements of more scenarios, improving flexibility of communication.

It should be noted that for implementation of each unit, reference may also be correspondingly made to the corresponding descriptions of the method embodiment shown in FIG. 7.

FIG. 13 is a diagram of a structure of a terminal device 130 according to an embodiment of this application. The terminal device 130 includes a processor 1301, a memory 1302, and a transceiver 1303. The processor 1301, the memory 1302, and the transceiver 1303 are connected to each other by a bus.

The memory 1302 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1302 is configured for a related computer program and data. The transceiver 1303 is configured to receive and transmit data.

The processor 1301 may be one or more central processing units (central processing units, CPUs). When the processor 1301 is one CPU, the CPU may be a single-core CPU or multi-core CPU.

The processor 1301 in the terminal device 130 is configured to read computer program code stored in the memory 1302, so that the terminal device implements steps or functions corresponding to the terminal device in any one of the embodiments in FIG. 5 to FIG. 7.

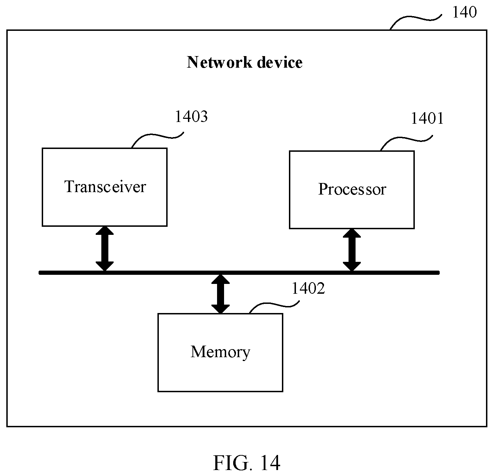

FIG. 14 is a diagram of a structure of a network device 140 according to an embodiment of this application. The network device 140 includes a processor 1401, a memory 1402, and a transceiver 1403. The processor 1401, the memory 1402, and the transceiver 1403 are connected to each other by a bus.

The memory 1402 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1402 is configured for a related computer program and data. The transceiver 1403 is configured to receive and transmit data.

The processor 1401 may be one or more central processing units (central processing units, CPUs). When the processor 1401 is one CPU, the CPU may be a single-core CPU or multi-core CPU.

The processor 1401 in the network device 140 is configured to read computer program code stored in the memory 1402, so that the network device implements steps or functions corresponding to the network device in any one of the embodiments in FIG. 5 to FIG. 7.

An embodiment of this application further provides a communication apparatus, including one or more processors, one or more memories, and one or more communication interfaces. The processor is configured to control the communication interface to receive and transmit signals. The memory is configured to store a computer program or data. The processor is configured to invoke the computer program or data from the memory and run the computer program or data, to perform the procedures and/or operations performed by the terminal device or network device in the method embodiments of this application.

For example, the processor may have functions of the obtaining unit 803 shown in FIG. 8, and the communication interface may have functions of the receiving unit 801 shown in FIG. 8.

Optionally, the memory and the processor in each of the foregoing apparatus embodiments may be units physically independent of each other, or the memory may be integrated with the processor. This is not limited in this application.

An embodiment of this application further provides a chip system. The chip system includes at least one processor, at least one memory, and at least one interface circuit. The memory, the interface circuit, and the at least one processor are connected to each other by a line. The at least one memory stores a computer program. When being executed by the processor, the computer program implements all or some of the procedures in the methods shown in FIG. 5, FIG. 6, and FIG. 7.

An embodiment of this application further provides a computer-readable storage medium. The computer-readable storage medium stores a computer program. When being run on a processor, the computer program implements all or some of the procedures in the methods shown in FIG. 5, FIG. 6, and FIG. 7.

An embodiment of this application further provides a computer program product. When being run on a processor, the computer program product implements all or some of the procedures in the methods shown in FIG. 5, FIG. 6, and FIG. 7.

An embodiment of this application further provides a communication system. The communication system includes a terminal device and a network device, where
the terminal device and the network device may be the terminal device and the network device in the method embodiment shown in FIG. 5, respectively; or
the terminal device and the network device may be the terminal device and the network device in the method embodiment shown in FIG. 6, respectively; or
the terminal device and the network device may be the terminal device and the network device in the method embodiment shown in FIG. 7, respectively.

Persons of ordinary skill in the art may understand that all or some of the procedures in the methods in the foregoing embodiments may be implemented by instructing related hardware by a computer program. The computer program may be stored in a computer-readable storage medium. When the computer program is executed, the procedures in the foregoing method embodiments can be implemented. The storage medium includes any medium that can store computer program code, such as a ROM, a random access memory RAM, a magnetic disk, or a compact disc.

## Claims

1. A method for measuring signal quality of a cell, comprising:
receiving a measurement configuration from a network device, wherein the measurement configuration comprises a trigger beam quantity, and the trigger beam quantity is a beam quantity threshold that triggers generation of a cell measurement result;
determining that a quantity of detected beams is greater than or equal to the trigger beam quantity, wherein the detected beams belong to one or more cells; and
obtaining a cell measurement result for the one or more cells based on signal quality of the detected beams.

2. The method according to claim 1, wherein the measurement configuration further comprises a trigger cell quantity, the trigger cell quantity is a cell quantity threshold that triggers reporting of a measurement report, and the method further comprises:
determining that a quantity of first cells meeting criteria is greater than or equal to the trigger cell quantity; and
sending a measurement report corresponding to the first cells to the network device.

3. The method according to claim 1 or 2, wherein
the determining that a quantity of detected beams is greater than or equal to the trigger beam quantity comprises:
determining that a quantity of detected second cells is greater than or equal to the trigger beam quantity; and
the obtaining a cell measurement result for the one or more cells based on signal quality of the detected beams comprises:
obtaining a cell measurement result for the second cell based on signal quality of the beams of the second cell.

4. The method according to claim 1 or 2, wherein
the determining that a quantity of detected beams is greater than or equal to the trigger beam quantity comprises:
determining that a sum of quantities of detected beams of cells is greater than or equal to the trigger beam quantity; and
the obtaining a cell measurement result for the one or more cells based on signal quality of the detected beams comprises:
obtaining a cell measurement result for each cell based on signal quality of the detected beams of the cell.

5. The method according to claim 1 or 2, wherein the determining that a quantity of detected beams is greater than or equal to the trigger beam quantity comprises:
determining that a quantity of beams detected before layer 1 filtering is greater than or equal to the trigger beam quantity; or
determining that a quantity of beams detected after layer 1 filtering is greater than or equal to the trigger beam quantity; or
determining that a quantity of beams detected after layer 3 beam filtering is greater than or equal to the trigger beam quantity; or
determining that a quantity of beams detected during beam selection/consolidation is greater than or equal to the trigger beam quantity.

6. The method according to any one of claims 1 to 5, wherein before the receiving a measurement configuration from a network device, the method further comprises:
sending flight status information to the network device, wherein a flight status comprises one or more of a flight altitude, a flight speed, a flight location, or a flight path.

7. The method according to any one of claims 1 to 5, wherein before the determining that a quantity of detected beams is greater than or equal to the trigger beam quantity, the method further comprises:
receiving indication information and flight reference information from the network device, wherein the indication information is used to indicate to use the trigger beam quantity when a flight status exceeds a range specified in the flight reference information, and the flight status comprises one or more of a flight altitude, a flight speed, a flight location, or a flight path; and
determining that the flight status is within the range specified in the flight reference information.

8. The method according to any one of claims 1 to 7, wherein the determining that a quantity of detected beams is greater than or equal to the trigger beam quantity comprises:
determining that a quantity of beams measured by a first type of antenna and/or a quantity of beams measured by a second type of antenna are/is greater than or equal to the trigger beam quantity.

9. The method according to claim 8, wherein the first type of antenna comprises a directional antenna, and the second type of antenna comprises an omnidirectional antenna.

10. The method according to any one of claims 1 to 9, wherein the measurement configuration further comprises a cumulative signal quality sum threshold, and the cumulative signal quality sum threshold is a cumulative signal quality sum threshold for beams that triggers generation of a cell measurement result; and
before the obtaining a cell measurement result for the one or more cells based on signal quality of the detected beams, the method further comprises:
determining that a cumulative signal quality sum of the detected beams is greater than or equal to the cumulative signal quality sum threshold.

11. A method for measuring signal quality of a cell, comprising:
generating a measurement configuration, wherein the measurement configuration comprises a trigger beam quantity, and the trigger beam quantity is a beam quantity threshold that triggers generation of a cell measurement result; and
sending the measurement configuration to a terminal device.

12. The method according to claim 11, wherein the measurement configuration further comprises a trigger cell quantity, the trigger cell quantity is a cell quantity threshold that triggers reporting of a measurement report, and the method further comprises:
receiving a measurement report from the terminal device.

13. The method according to claim 11 or 12, wherein before the generating a measurement configuration, the method further comprises:
obtaining flight status information of the terminal device;
determining, based on the flight status information, that a flight status of the terminal device exceeds a range specified in flight reference information, wherein the flight status comprises one or more of a flight altitude, a flight speed, a flight location, or a flight path; and
configuring the trigger beam quantity.

14. The method according to claim 13, wherein the obtaining a flight status of the terminal device comprises:
receiving the flight status information from the terminal device.

15. The method according to claim 11 or 12, further comprising:
sending indication information and flight reference information to the terminal device, wherein the indication information is used to indicate to use the trigger beam quantity when a flight status exceeds a range specified in the flight reference information, and the flight status comprises one or more of a flight altitude, a flight speed, a flight location, or a flight path.

16. The method according to any one of claims 11 to 15, wherein the measurement configuration further comprises a cumulative signal quality sum threshold, and the cumulative signal quality sum threshold is a cumulative signal quality sum threshold for beams that triggers generation of a cell measurement result.

17. A communication apparatus, comprising at least one unit that is configured to perform the method according to any one of claims 1 to 10.

18. A communication apparatus, comprising at least one unit that is configured to perform the method according to any one of claims 11 to 16.

19. A chip system, wherein the chip system comprises at least one processor, at least one memory, and at least one interface circuit; the memory, the interface circuit, and the at least one processor are connected to each other by a line; the at least one memory stores a computer program; and when being executed by the processor, the computer program implements the method according to any one of claims 1 to 16.

20. A computer-readable storage medium, wherein the computer-readable storage medium stores a computer program, and when being run on a processor, the computer program implements the method according to any one of claims 1 to 16.
